# EUROPEAN PATENT APPLICATION

(11) **EP 3 467 195 A1**
(43) Date of publication of application: **10.04.2019**
(21) Application number: 17806576.9
(22) Date of filing: 29.05.2017
(51) Int. Cl.: D06H 5/00, B41J 2/01, D06B 11/00, D06C 23/00

(54) **POROUS MATERIAL BELT, METHOD FOR PRODUCING SAME, AND INKJET RECORDING DEVICE**

(30) Priority: 30.05.2016 JP 2016107430
(71) Applicant: Canon Kabushiki Kaisha, Tokyo 146-8501 (JP)
(72) Inventor: YAGYU, Mineto, Tokyo 146-8501 (JP); HASEGAWA, Kenji, Tokyo 146-8501 (JP); TERUI, Makoto, Tokyo 146-8501 (JP); YAMANE, Toru, Tokyo 146-8501 (JP)
(74) Representative: TBK
(86) International application number: PCT/JP2017/019824
(87) International publication number: WO 2017/209021

(57) **Abstract**

This porous material belt is characterized by comprising: connected bodies containing a porous material; a joining material A for joining the ends of the connected bodies together; and a welding material A that is arranged between the connected bodies and the joining material A, that permeates at least part of pores in the porous material of the connected bodies, and that bonds the connected bodies and the joining material A.

## Description

### [Technical Field]

The present invention relates to a porous body belt and a method of producing thereof, and an ink jet recording apparatus.

### [Background Art]

In recent years, a porous body belt using a porous body which is excellent in filter performance, water absorbability, and excellent flexibility for a wide range of applications such as medical and hygiene, clothing, living related materials, and industrial materials has been required. As a typical example of the porous body, a nonwoven fabric can be exemplified. PTL 1 discloses the nonwoven fabric in which end surfaces of the nonwoven fabric are butted against each other and are welded to each other by heating the butted portions. PTL 2 discloses a method of bonding end portions of the nonwoven fabric mainly formed of thermoplastic fibers using an ultrasonic welder, in which after forming a concavo-convex portion by knurling, a plate-shaped body in which each convex tip end portion is flattened is used as a lower plate so as to weld a plurality of points and bond them.

### [Citation List]

### [Patent Literature]

PTL 1: Japanese Patent Application Laid-Open No. 2006-37300
PTL 2: Japanese Patent Application Laid-Open No. H6-198740

### [Summary of Invention]

### [Technical Problem]

In some cases, the porous body belt is required to have tensile strength with respect to conveyance and winding in addition to the functionality such as filter performance and water absorbability. In a bonding portion of the nonwoven fabric disclosed in PTL 1, only a part of the fiber exposed at one end surface and a part of the fiber facing fiber exposed at the other end surface are welded, and a welded area is small, and thus it is hard to say that the tensile strength is sufficient. In addition, according to the method disclosed in PTL 2, a stress tends to concentrate on a welded portion in a dotted state upon tension, and thus it is hard to say that the tensile strength is sufficient. On the other hand, in a case where the porous body belt is caused to run on a circumference of a roller, the bending strength in a connecting portion of the porous body belt is required to be high.

An object of the present invention is to provide a porous body belt which is capable of achieving both high tensile strength and high bending strength.

### [Solution to Problem]

According to one aspect of the present invention, there is provided a porous body belt including a body to be connected including a porous body, a connecting material A that bonds end portions of the body to be connected to each other, and a welding material A which is disposed between the body to be connected and the connecting material A, penetrates at least a part of a void portion of the porous body of the body to be connected, and adheres the body to be connected and the connecting material A to each other.

According to another aspect of the present invention, there is provided a method of producing the porous body belt, the method including a step of disposing a welding material A and the connecting material A in this order on the body to be connected; and a step of heating at a temperature equal to or higher than a softening point of the welding material A and at a temperature lower than a softening point of a material constituting the porous body contained in the body to be connected and a softening point of a material constituting the connecting material A.

According to still another aspect of the present invention, there is provided an ink jet recording apparatus including an image forming unit that forms a first image including a first liquid and a coloring material on an ink receiving medium; and a liquid absorbing member that includes a porous body which is configured to be brought into contact with the first image so as to absorb at least a portion of the first liquid from the first image, in which the liquid absorbing member is the porous body belt.

### [Advantageous Effects of Invention]

According to the present invention, it is possible to provide a porous body belt which is capable of achieving both high tensile strength and high bending strength.

### [Brief Description of Drawings]

Fig. 1 is a sectional view of a porous body belt before welding a welding material A in Example 1.
Fig. 2 is a sectional view illustrating an example of the porous body belt according to the present invention.
Fig. 3 is a sectional view of a porous body belt before welding a welding material A in Example 2.
Fig. 4 is a sectional view illustrating an example of the porous body belt according to the present invention.
Fig. 5 is a sectional view illustrating an example of the porous body belt according to the present invention.
Fig. 6 is a sectional view illustrating an example of the porous body belt according to the present invention.
Fig. 7 is a schematic view for illustrating a connecting portion of the porous body belt when running between rollers.
Fig. 8 is a schematic view for illustrating a connecting portion of the porous body belt when running on rollers.
Fig. 9 is a schematic view for illustrating an example of an apparatus used in a method of producing the porous body belt according to the present invention.
Fig. 10 is a schematic diagram illustrating one example of a configuration of a transfer type ink jet recording apparatus in one embodiment according to the present invention.
Fig. 11 is a schematic diagram illustrating an example of a configuration of a direct drawing type ink jet recording apparatus in one embodiment according to the present invention.
Fig. 12 is a block diagram illustrating a control system of the entire apparatus in the ink jet recording apparatus illustrated in Figs. 10 and 11.
Fig. 13 is a block diagram of a printer control unit in the transfer type ink jet recording apparatus illustrated in Fig. 10.
Fig. 14 is a block diagram of a printer control unit in a direct drawing type ink jet recording apparatus illustrated in Fig. 11.
Fig. 15 is a sectional view illustrating an example of a porous body of the porous body belt which is a liquid absorbing member according to this embodiment.

### [Description of Embodiments]

### [Porous body belt]

A porous body belt according to the present invention includes a body to be connected including a porous body. In addition, the porous body belt includes the connecting material A (also referred to as a first connecting material) that bonds end portions of the body to be connected to each other. Further, the porous body belt includes a welding material A which is disposed between the body to be connected and the connecting material A, and penetrates at least a part of a void portion of the porous body of the body to be connected, and adheres the body to be connected and the connecting material A to each other.

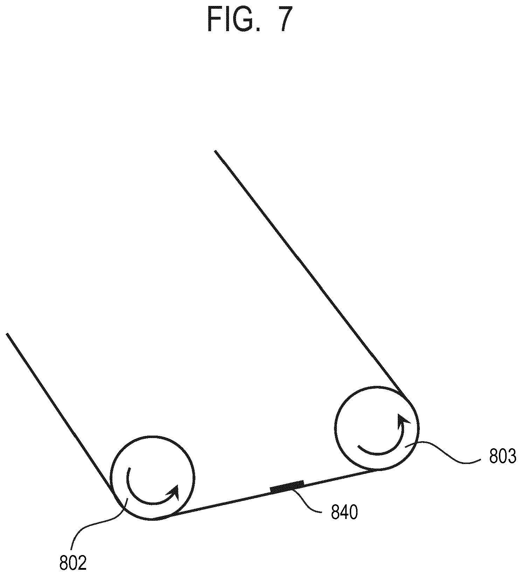

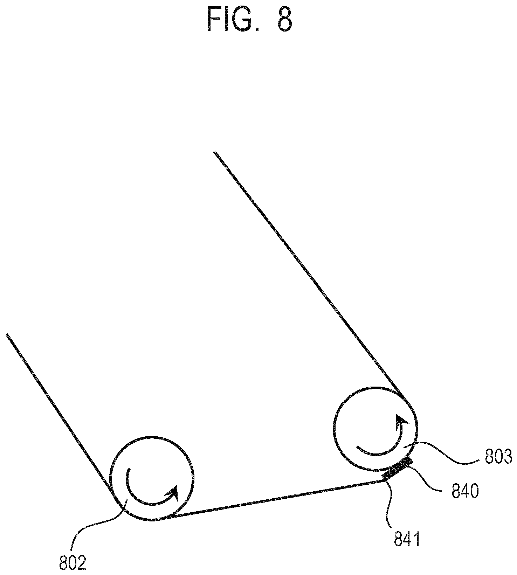

As described above, the porous body belt is required to have high tensile strength with respect to conveyance and winding in addition to the functionality such as filter performance and water absorbability. In addition, in a case where the porous body belt is caused to run on the circumference of the roller, the bending strength in the connecting portion (also referred to as a bonding portion) of the porous body belt is required to be high. Fig. 7 illustrates a case where the porous body belt including a connecting portion 840 runs between rollers 802 and 803. In the connecting portion 840, a front surface of one end portion of the belt and a back surface of the other end portion are often bonded to each other using an adhesive. In a case where the front surface and the back surface of the end portion are bonded to each other, the thickness and the hardness of the connecting portion 840 are different from those of the porous body belt other than the connecting portion. Fig. 8 illustrates a state in which the connecting portion 840 runs on the circumference of the roller 803. In a case where the connecting portion 840 becomes thick or hard, the connecting portion 840 does not follow the circumference of the roller 803, and a bent portion 841 is generated at the end portion of the connecting portion 840 as illustrated in Fig. 8. Since a diameter of the bent portion 841 is smaller than the roller diameter, the bending strength is low. Further, a bending angle is also governed by the roller diameter and the length of the connecting portion 840, and the shorter the length of the connecting portion 840, the more advantageous, but if the length of the connecting portion 840 is short, the tensile strength is decreased. That is, there is a trade-off relationship between the tensile strength and the bending strength, and it is desired that both are compatible.

In the porous body belt according to the present invention, one end portion of the body to be connected including the porous body and the other end portion thereof are bonded to each other via the welding material A and the connecting material A. Here, since the welding material A penetrates at least a part of a void portion of the porous body, the body to be connected and the connecting material A are more strongly bonded to each other, and thereby a high tensile strength can be obtained. In addition, since the welding material A penetrates at least a part of a gap between the end portions of the body to be connected and the void portion of the porous body, it is possible to improve the bending strength of the entire porous body belt while maintaining the tensile strength. From the viewpoint that it is possible to allow the welding material A to penetrate at least a part of the void portion of the porous body at the time of bonding the body to be connected, a softening point of the welding material A is preferably lower than the softening point of the material constituting the porous body and the softening point of the material constituting the connecting material A.

In the present invention, the "softening point" refers to a melting point in a case of having the melting point, and a glass transition point in a case of having no melting point but having the glass transition point. The softening point in the present invention is a value measured by differential scanning calorimetry (DSC: Differential scanning calorimetry).

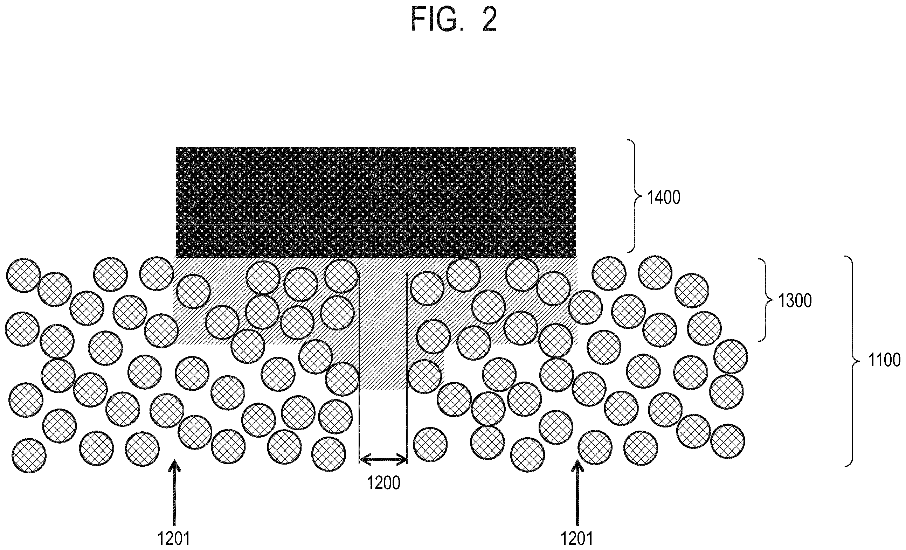

An example of the porous body belt according to the present invention is illustrated in Fig. 2. The porous body belt as illustrated in Fig. 2 includes a body to be connected 1100 and a connecting material A1400 disposed on the body to be connected 1100. In addition, the welding material A1300 is disposed between the body to be connected 1100 and the connecting material A1400. As illustrated in Fig. 2, the welding material A1300 penetrates at least a part of the void portion of the porous body of the body to be connected 1100. As a result, the welding material A1300 adheres the body to be connected 1100 and the connecting member A1400 to each other, and bonds the end portions of the body to be connected 1100 to each other.

Each constitution of the porous body belt will be described below. Hereinafter, the connecting materials A and B are simply referred to as "connecting material" and the welding materials A and B are simply referred to as "welding material" in some cases.

### (Body to be connected)

The body to be connected includes a porous body. The shape of the body to be connected is not particularly limited as long as it can form a porous body belt, but it is preferably in the form of a sheet. Then, the porous body belt can be produced by bonding the end portions of the sheet-like body to be connected to each other. It is preferable that the end portion to be bonded is an end portion in the longitudinal direction of the body to be connected. The porous body has a void portion in order to obtain good collecting force, absorbing power, sufficient trapping capacity, and absorbing capacity such as liquid and solid content. Examples of the porous body include fibrous members such as nonwoven fabric, woven fabric, and mesh (mesh net), and various other porous bodies. Among them, a fibrous member is preferable, and a nonwoven fabric is more preferable from the viewpoints of strength, breathability, flexibility, workability, and the like. As a material constituting the porous body, a material having a softening point higher than the softening point of the welding material A described later is preferable. For example, examples thereof include polyolefin (for example, polyethylene (PE) and polypropylene (PP)), polyurethane, nylon, polyamide, polyester (for example, polyethylene terephthalate (PET)), polysulfone (PSF), polyphenylene sulfide (PPS), and fluororesin. As the fluorine-based polymer contained in the fluororesin, specifically, polytetrafluoroethylene (PTFE), polychlorotrifluoroethylene (PCTFE), polyvinylidene fluoride (PVDF), polyvinyl fluoride (PVF), perfluoroalkoxy fluorine resin (PFA: perfluoroalkoxy alkane (tetrafluoroethylene/perfluoroalkyl vinyl ether copolymer resin)), ethylene tetrafluoride/propylene hexafluoride copolymer (FEP), ethylene · tetrafluoroethylene copolymer (ETFE), and ethylene/chlorotrifluoroethylene copolymer (ECTFE) can be exemplified. These may be used alone, or two or more kinds thereof may be used in combination. In addition, although it suffices for the body to be connected to have at least the porous body at the end portion to which the body to be connected is bonded, the body to be connected itself may be a porous body. In a case where the porous body is formed as a plurality of layers as described later, one kind of these materials may be used in each layer, or two or more kinds thereof may be used in combination. When a fibrous member such as a nonwoven fabric is used, it is possible to use a fibrous member made of a single material fiber or a fibrous member mixed with two or more kinds of fibers made of different materials.

In a case where the porous body belt according to the present invention is used as a member for wiping out a liquid or a solid matter adhering to a surface to be cleaned with high accuracy or used as a member for absorbing a liquid component contained in an image formed on an ink receiving medium, it is preferable that the body to be connected is formed of a plurality of layers. The total number of layers in the body to be connected is not particularly limited, and it can be appropriately selected from the range of 2 to 5 layers, for example. Each layer is bonded between the layers, and the strength as a whole is maintained. The body to be connected may have a laminated structure including, for example, a first layer and a second layer. Each of the first layer and the second layer may be formed of a single layer or a plurality of layers. Further, another layer may be included on the second layer. Further, although different layers may be provided between the respective layers, it is preferable that at least the first layer and the second layer are adjacent layers. In a case where the body to be connected is formed of the plurality of layers, "the softening point of the material constituting the porous body" indicates the softening point of the material constituting the layer being in contact with the welding material A.

The porosity of the porous body can be evaluated by air permeability thereof. The air permeability can be defined by a Gurley value measured by a Gurley testing machine defined in JIS P 8117. The Gurley value of the whole body to be connected according to the present invention is preferably 10 seconds or less. Note that, the lower the Gurley value, the higher the breathability is. The lower limit value of the Gurley value is not particularly limited, and it can be set to about 0.3 seconds. Hereinafter, a case where the body to be connected according to the present invention is formed of the first layer and the second layer will be described.

As the porous body constituting the first layer and the material thereof, the above-mentioned porous body and the material thereof can be used. In the present invention, the thickness of the body to be connected is not particularly limited, and is preferably 50 µm to 500 µm, and is more preferably 150 µm to 350 µm. The thickness of the first layer of the porous body is preferably 100 µm or less. The lower limit of the thickness of the first layer is not particularly limited, and can be appropriately set according to the use of the porous body belt, and can be set to, for example, 1 µm or more. The thickness of the layer can be obtained by measuring the layer thickness of optional 10 points with a straight type micrometer (trade name, OMV-25, manufactured by Mitutoyo Corporation) and calculating the average value thereof.

The second layer of the porous body can be formed by forming a laminated structure together with the first layer so as to obtain a good collecting force, absorbing power, sufficient trapping capacity, and absorbing capacity such as liquid and solid content. Therefore, it is preferable that the second layer has a larger air permeability (average pore diameter) than the first layer, the substance collected in the first layer is contained in the second layer, and a higher trapping capacity is obtained is able to provide. That is, the second layer preferably has a lower Gurley value than that of the first layer. Further, the second layer is preferably a layer having air permeability and a function as a support of the porous body belt. As a porous body constituting the second layer and a material thereof, the above-mentioned porous body and the material thereof can be used. Also, the second layer can be formed as a plurality of layers. In a case where the second layer is formed of the plurality of layers, layers different in constituent material and form may be used in combination. In a case where the second layer is formed of the plurality of layers, the above-mentioned materials can be used as the constituent material of each layer. Even in the case where the second layer is formed of the plurality of layers, as described above, it is preferable that the air permeability of the second layer as a whole is higher than that of the first layer.

In the porous body belt, it is preferable that the end portions of the body to be connected are not in direct contact with each other, and a gap is provided between one end portion and the other end portion, and it is more preferable that the welding material is present in this gap. That is, it is preferable that the end portions of the body to be connected are bonded to each other via the welding material. By the fact that the bonding portion of the body to be connected has a gap or by the presence of the welding material in this gap, contact between the end portions of the body to be connected when bending the porous body belt is suppressed, and damage to the bonding portion due to the bending of the porous body belt can be further suppressed. The method of adjusting the gap of the bonding portion is not particularly limited, and, for example, it can be adjusted by the installation position of the end portion of the body to be connected at the time of bonding, a blade width of the cutter at the time of cutting by cutting both end portions of the body to be connected, and the heating temperature at the time of bonding.

### (Connecting material)

The connecting material bonds the end portions of the body to be connected to each other. A plurality of the connecting materials may be used. For example, the porous body belt preferably includes a connecting material A (also referred to as a first connecting material) that bonds the end portions of the first surface (front surface) of the body to be connected to each other, and a connecting material B (also referred to as a second connecting material) that bonds the end portions of the a second surface (back surface) of the body to be connected to each other. As a material constituting the connecting material, a material having a softening point higher than the softening point of a material constituting the welding material described later is preferable. For example, polypropylene (PP) and the like can be exemplified. These may be used alone, or two or more kinds thereof may be used in combination. Also, in a case of using the plurality of connecting materials, the materials constituting the connecting material may be the same as or different from each other. The shape of the connecting material is not particularly limited, and is preferably a layered connecting material. The layered connecting material is also referred to as "connecting material layer". In addition, the connecting material also functions as a reinforcing material for reinforcing the connecting portion. Therefore, the connecting material can also be referred to as a reinforcing material.

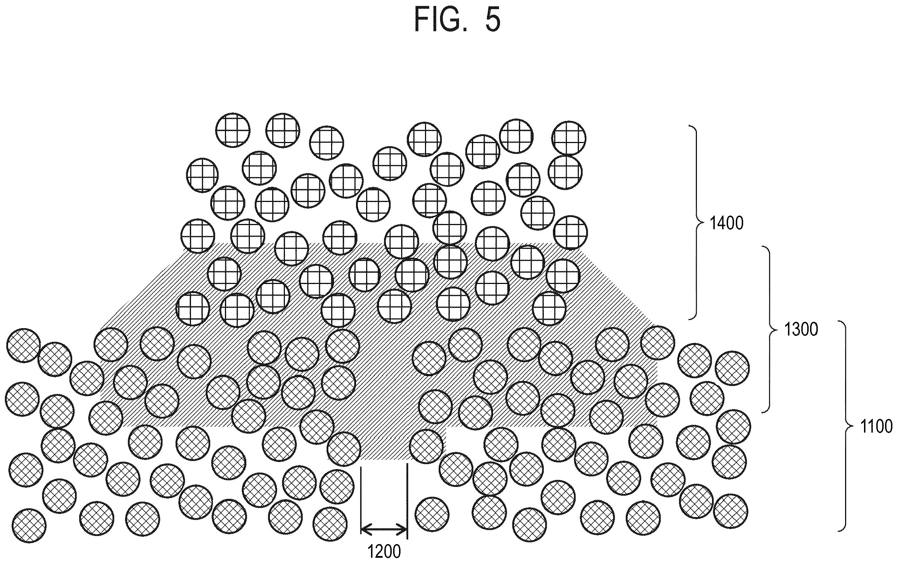

In addition, the connecting material preferably includes a porous body. As illustrated in Fig. 5, for example, when the connecting material includes the porous body, the welding material A1300 penetrates not only at least a part of the void portion of the porous body of the body to be connected 1100 but also at least a part of the void portion of the porous body of the connecting material A1400. As a result, a porous body belt having higher tensile strength and bending strength can be obtained. In addition, when rotating and conveying the porous body belt along the roller, the sound is quiet and the porous body belt can be bent gently along the roller. This is considered to be due to the advantageous flexibility of the porous body of the connecting material. The thickness of the connecting material is not particularly limited, and can be, for example, 50 to 500 µm. The width of the connecting material in the longitudinal direction of the porous body belt is preferably from 3 to 50 mm, and is more preferably from 5 to 10 mm. In a case where the body to be connected is formed of the plurality of connecting material layer, "the softening point of the material constituting the connecting material" indicates the softening point of the material constituting the layer being in contact with the welding material A. Further, in a case where the end portions of the body to be connected have gaps, the connecting material may be disposed on the body to be connected across the gap.

### (Welding material)

The welding material is disposed between the body to be connected and the connecting material, penetrates at least a part of the void portion of the porous body of the body to be connected, and adheres the body to be connected and the connecting material to each other. A plurality of the welding materials may be used. For example, the porous body belt preferably includes a welding material A (also referred to as a first welding material) for adhering the first surface (front surface) of the body to be connected and the connecting material A to each other, and a welding material B (also referred to as a second welding material) for adhering a second surface (back surface) of the body to be connected and the connecting material B to each other. The welding material is preferably a material having a softening point lower than the softening point of the material constituting the porous body and the softening point of the material constituting the connecting material. For example, polyethylene (PE), polypropylene (PP) and the like can be exemplified. These may be used alone, or two or more kinds thereof may be used in combination. The softening point of the welding material is preferably lower than the softening point of the material constituting the porous body and the softening point of the material constituting the connecting material by at least 30°C. In a case where a plurality of welding materials are used, the welding materials may be the same as or different from each other. The shape of the welding material is not particularly limited. The layered welding material is also referred to as "welding material layer".

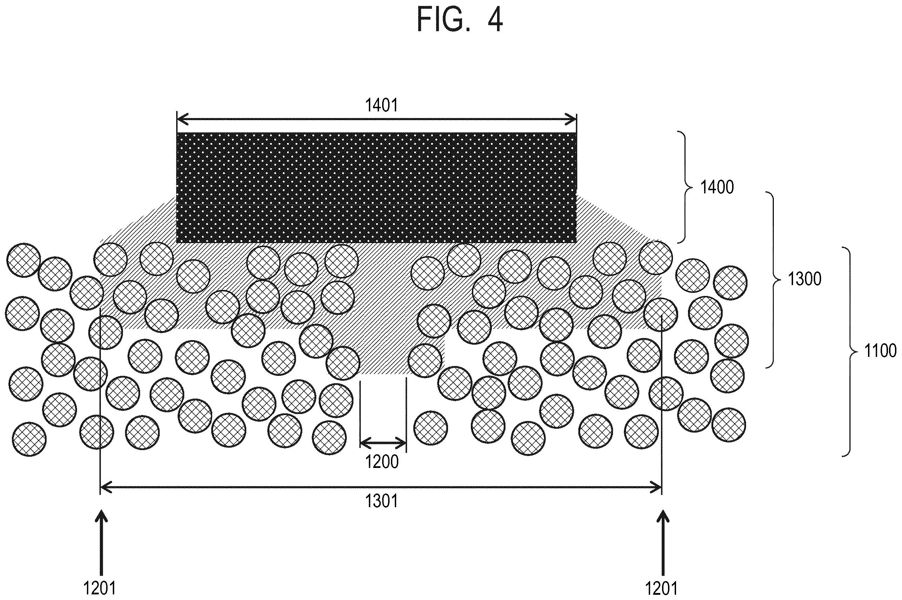

Also, in the cross section of the porous body belt in the longitudinal direction, the penetration width of the welding material A to the body to be connected is preferably larger than the width of the connecting material A. For example, as illustrated in Fig. 4, it is preferable that a penetration width 1301 of the welding material A1300 to the body to be connected 1100 is wider than a width 1401 of the connecting material A1400. The end portion 1201 of the welding material A1300 is a portion where inflection points of both thickness and hardness are concentrated, and the stress tends to concentrate at the time of bending. However, as illustrated in Fig. 4, by widening the width of the welding material A1300, the inflection points of thickness and hardness can be dispersed, so that the bending strength can be further improved. The method for adjusting the penetration width of the welding material is not particularly limited, and examples thereof include adjusting the width of the welding material, adjusting the heating temperature by the heating heater when melting the welding material, adjusting the thickness of the welding material, and adjusting the pore diameter of the surface of the porous body penetrating the welding material, or the like. The penetration width of the welding material is determined by cutting the center of the bonding portion of the porous body belt after welding in the longitudinal direction and observing the obtained cross section with a scanning electron microscope, and one with the longest penetration width of the welding material is set as the penetration width of the welding material.

Further, since it is advantageous that the fibrous material remains in the welding material A after bonding in terms of bending performance of the welding material A, it is preferable that the welding material A is made of a nonwoven fabric containing fibers having a core-sheath structure, and the softening point of the material constituting the sheath portion contained in the fiber is lower than the softening point of the material constituting the core portion. The core-sheath structure is a structure having the core portion at the center portion and the sheath portion at the outside of the core portion, in which the material constituting the core portion is a core material and the material constituting the sheath portion is a sheath material. In a case where the welding material A is formed of a plurality of materials as described above, the softening point of at least one material out of the materials constituting the welding material A is preferably lower than the softening point of the material constituting the porous body and the softening point of the material constituting the connecting material A.

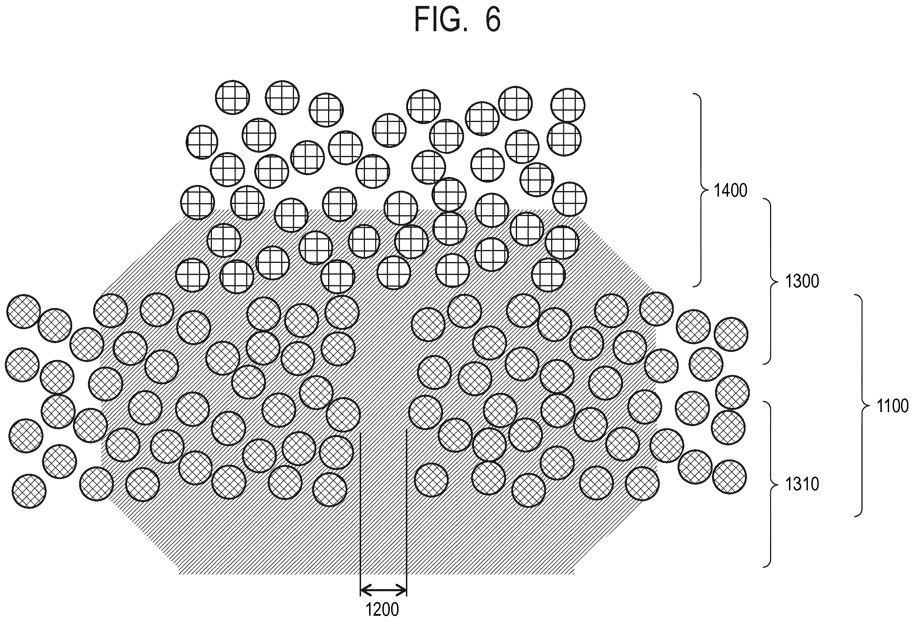

It is preferable that the welding material B is further provided on a surface of the body to be connected opposite to the side on which the welding material A and the connecting material A are disposed, and at a position facing the welding material A. This is because in the use method in which the connecting portion is bent in either the concave direction or the convex direction, it is advantageous that the welding materials are present on both the front and back sides of the body to be connected. The welding material B penetrates at least a part of the void portion of the porous body of the body to be connected. For example, as illustrated in Fig. 6, the welding material B1310 can be further formed on the side opposite to the side on which the welding material A1300 is formed. Similar to the welding material A1300, the welding material B1310 also penetrates at least a part of a void portion of the porous body of the body to be connected 1100. The welding material B may have the same configuration as or may have a different configuration the welding material A. Further, from the viewpoint of improving the tensile strength and the bending strength, it is preferable that the porous body belt further includes a connecting material B that bonds end portions of the body to be connected; and a welding material B that is disposed between the body to be connected and the connecting material B, penetrates at least a part of a void portion of the porous body of the body to be connected, and adheres the body to be connected and the connecting material B to each other, in which the connecting material A bonds end portions of a first surface of the body to be connected to each other, the connecting material B bonds end portions of a second surface of the body to be connected to each other, the welding material A bonds the first surface of the body to be connected and the connecting material A to each other, and the welding material B bonds the second surface of the body to be connected and the connecting material B to each other. Further, in the cross section of the porous body belt in the longitudinal direction, it is preferably that a penetration width of the welding material A to the body to be connected was wider than a penetration width of the welding material B.

### [Method of producing porous body belt]

The method of producing a porous body belt includes the following steps. A step of disposing the welding material A and the connecting material A on the body to be connected in this order. A step of heating at a temperature equal to or higher than a softening point of the welding material A and at a temperature lower than a softening point of a material constituting the porous body contained in the body to be connected and a softening point of a material constituting the connecting material A. According to the producing method, it is possible to simply produce the porous body belt according to the present invention. Further, in a case where the connecting material and the welding material are provided on both front surface and back surface of the connecting portion of the porous body belt, the method of producing the porous body belt includes the following steps. A step of disposing the welding material A and the connecting material A on a first surface on the body to be connected in this order. A step of disposing the welding material B and the connecting material B on a second surface on the body to be connected in this order. A step of heating at a temperature equal to or higher than a softening point of the welding material A and at a temperature lower than a softening point of a material constituting the porous body contained in the body to be connected and a softening point of a material constituting the connecting material A. A step of heating at a temperature equal to or higher than a softening point of the welding material B and at a temperature lower than a softening point of a material constituting the porous body contained in the body to be connected and a softening point of a material constituting the connecting material B.

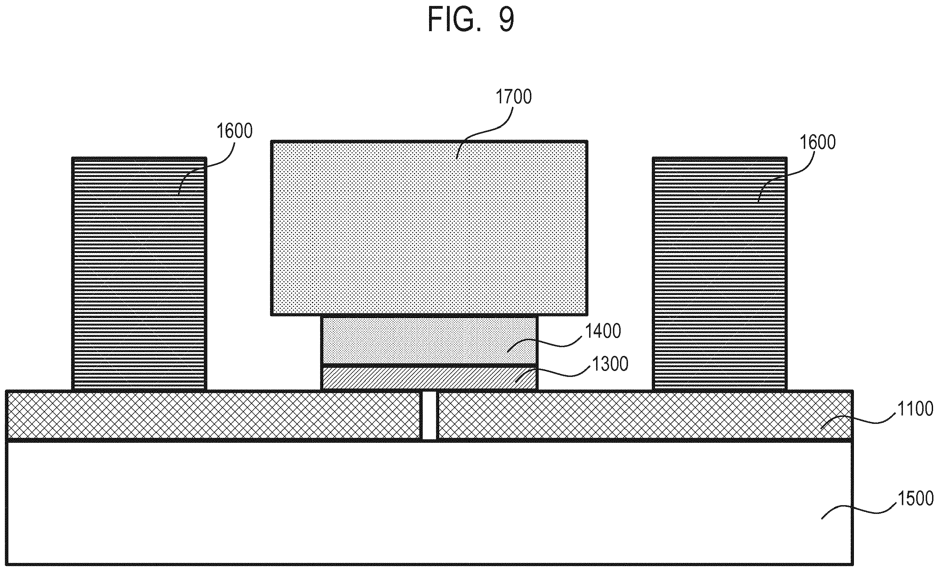

The porous body belt according to the present invention can be produced by using, for example, an apparatus illustrated in Fig. 9. First, end portions of a body to be connected 1100 are connected from the left and right on a flat stage 1500. At this time, the end portions of the body to be connected 1100 are arranged so as to face each other. In a case where a large gap is generated by merely butting the end portions together, the end portions of the body to be connected is overlapped from the left and right with the connecting portion as the center, and the body to be connected can be fixed with a fixed weight 1600 so as not to move, and the central portion of the overlapped portion can be cut with a cutter. With this, a bonded state with almost no gap is realized. Next, the welding material A1300 is laminated so as to span the connecting portion, and the connecting material A1400 is further laminated. The welding material A1300 and the connecting material A1400 may be laminated in advance. Thereafter, a pressure block 1700 covering the entire area of the welding material A1300 and the connecting material A1400 is brought into close contact with the connecting material A1400 and pressurized to fix the body to be connected 1100, the welding material A1300, and the connecting material A1400 to the stage 1500.

A pressurized portion is heated at a temperature equal to or higher than a softening point of the welding material A1300 and at a temperature lower than a softening point of a material constituting the porous body contained in the body to be connected 1100 and a softening point of a material constituting the connecting material A1400. The heating temperature is preferably higher than the softening point of the welding material A1300 by 10°C or higher. The heating temperature is preferably lower than the softening point of the material constituting the porous body included in the body to be connected 1100 and the softening point of the material constituting the connecting material A1400 by at least 10°C. The heating can be performed with a heater. Even if a heater is embedded in the pressure block 1700, a heater may be embedded in the stage 1500. Further, the heating may be performed by both heaters of the stage 1500 and the pressure block 1700. The heater is preferably an elongated heater capable of covering the entire length of the connecting portion, but it may be a heater of about 15 mm square which can scan along the connecting portion. Alternatively, a transparent pressure body may be used as the pressure block 1700, and laser heating may be performed using this transparent pressure body. Thereafter, the porous body belt is obtained by cooling to a temperature sufficiently lower than the softening point of the welding material A1300 and relieving the pressure.

### [Ink jet recording apparatus]

An ink jet recording apparatus according to an embodiment of the present invention will be described below with reference to the drawings.

The ink jet recording apparatus of the present invention includes an image forming unit that forms a first image including a first liquid and a coloring material on an ink receiving medium; and a liquid absorbing member that includes a porous body which is configured to be brought into contact with the first image so as to absorb at least a portion of the first liquid from the first image. The liquid absorbing member is the porous body belt according to the present invention. When the porous body belt according to the present invention is used as the liquid absorbing member, it is possible to increase the concentration by absorbing the liquid component containing moisture in an image, for example, without heating or while suppressing heating as much as possible.

Examples of the ink jet recording apparatus of the present invention include an ink jet recording apparatus which forms a first image (ink image before liquid absorption) is formed by ejecting ink onto a transfer body as an ink receiving medium (also referred to as an ejection receiving medium), an ink jet recording apparatus which transfers a second image (ink image after liquid absorption) after liquid absorption from an ink image by a liquid absorbing member onto a recording medium, and an ink jet recording apparatus which forms a first image on a recording medium as an ink receiving medium. In the present invention, the former ink jet recording apparatus will hereinafter be referred to as a transfer type ink jet recording apparatus for the sake of convenience, and the latter ink jet recording apparatus is hereinafter referred to as a direct drawing type ink jet recording apparatus for the sake of convenience.

Each ink jet recording apparatus will be described below.

### (Transfer-type ink jet recording apparatus)

In the transfer type ink jet recording apparatus, ink receiving medium is a transfer body for temporarily holding a first image and a second image obtained by absorbing at least a portion of a first liquid from the first image. The transfer type ink jet recording apparatus also includes a transfer unit including a pressing member for transferring the second image onto a recording medium on which a final image is to be formed.

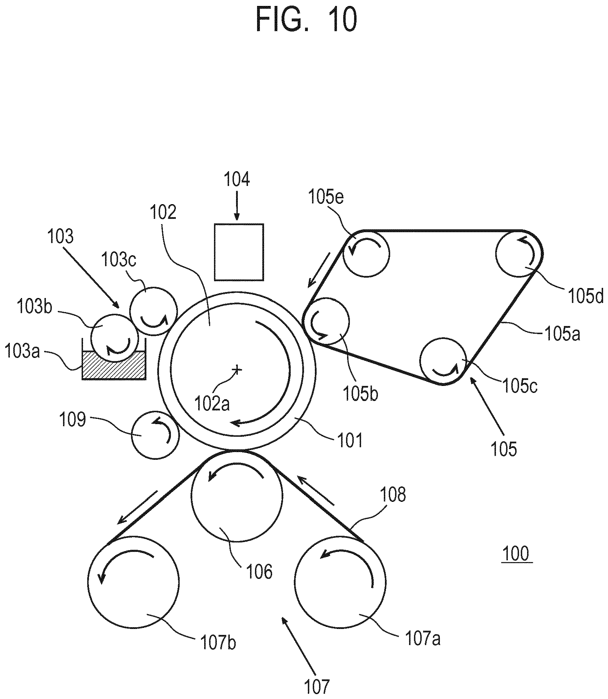

Fig. 10 is a schematic diagram illustrating one example of a schematic configuration of a transfer type ink jet recording apparatus of the present embodiment. As illustrated in Fig. 10, the transfer type ink jet recording apparatus 100 includes the transfer body 101 supported by a support member 102, a reaction liquid applying device 103 for applying a reaction liquid onto the transfer body 101, an ink applying device 104 for applying ink onto the transfer body 101 on which the reaction liquid is applied so as to form an ink image (the first image) on the transfer body 101, a liquid absorbing device 105 for absorbing the liquid component from the first image on the transfer body 101, and the pressing member 106 for transferring the second image on the transfer body 101 from which the liquid component has been removed by pressing the recording medium onto the recording medium 108 such as paper. In addition, the transfer type ink jet recording apparatus 100 may include a cleaning member for transfer body 109 for cleaning the surface of the transfer body 101 after the transfer.

The support member 102 rotates about a rotation axis 102a of the support member 102 in the direction of an arrow in Fig. 10. With the rotation of the support member 102, the transfer body 101 is moved. The application of the reaction liquid by the reaction liquid applying device 103 and the application of the ink by the ink applying device 104 are sequentially performed on the transfer body 101 to be moved, and thereby the first image is formed on the transfer body 101. The first image formed on the transfer body 101 is moved to a position where the first image is configured to be brought into contact with the liquid absorbing member 105a of the liquid absorbing device 105 by the movement of the transfer body 101.

The liquid absorbing member 105a of the liquid absorbing device 105 moves in synchronization with the rotation of the transfer body 101. The first image formed on the transfer body 101 passes through a state of being in contact with the moving liquid absorbing member 105a. During this time, the liquid absorbing member 105a removes the liquid component from the first image. Note that, the liquid component contained in the first image is removed by passing through the state of being in contact with the liquid absorbing member 105a. In this contact state, it is preferable that the liquid absorbing member 105a is pressed against the first image with a predetermined pressing force in order to effectively function the liquid absorbing member 105a. The removal of the liquid component can be expressed from a different point of view as concentrating the ink constituting the first image formed on the transfer body 101. The concentration of the ink means that the content ratio of solid components such as a coloring material and a resin contained in the ink to the liquid component is increased as the liquid component contained in the ink is decreased.

Then, the second image after the liquid component has been removed is moved to a transfer unit which is configured to be brought into contact with the recording medium 108 conveyed by a conveyance device for recording medium 107 by the movement of the transfer body 101. While the second image from which the liquid component is removed and the recording medium 108 are in contact with each other, the pressing member 106 presses the recording medium 108, and thereby an ink image is transferred onto the recording medium 108. As a result, a final image is formed on the recording medium. The ink image transferred onto the recording medium 108 is a reverse image of the second image. In the following description, the post-transfer ink image may be referred to as a third image in addition to the first image (the ink image before liquid removal) and the second image (the ink image after liquid removal).

Note that, since the first image is formed by applying ink after the reaction liquid is applied onto the transfer body 101, the reaction liquid remains in a non-image region (a non-ink image forming area) without reacting with the ink. In this apparatus, the liquid absorbing member 105a is in contact (pressure contact) with not only the first image but also the unreacted reaction liquid, and the liquid component of the reaction liquid is also removed from the surface of the transfer body 101. Therefore, it is expressed and described that the liquid component is removed from the first image, but this is not limited to the meaning that the liquid component is removed from only the first image, but means that a liquid component is removed from at least the first image on the transfer body 101. For example, it is possible to remove the liquid component in the reaction liquid applied to the outer region of the first image together with the first image.

Note that, the liquid component is not particularly limited as long as it does not have a certain shape, has fluidity, and has a substantially constant volume. For example, water, an organic solvent, or the like contained in the ink and the reaction liquid are exemplified as a liquid component. Also, even in a case where the clear ink is contained in the first image, it is possible to concentrate the ink by the liquid absorption treatment. For example, when the clear ink is applied onto the color ink containing the coloring material applied onto the transfer body 101, the clear ink is present on the entire surface of the first image, or the clear ink partially present at one or more places on the surface of the first image, and the color ink present in other places. In the first image, in the places where the clear ink is present on the color ink, the porous body absorbs the liquid component of the clear ink on the surface of the first image and the liquid component of the clear ink moves. Accordingly, the liquid component in the color ink moves to the porous body side, and thereby the liquid component in the color ink is absorbed. On the other hand, in the places where a region of the clear ink and a region of the color ink present on the surface of the first image, the respective liquid components of the color ink and the clear ink move to the porous body side, and thereby the aqueous liquid component are absorbed. Note that, the clear ink may contain a large amount of components for improving transferability of the image from the transfer body 101 to the recording medium 108. For example, the content of the component that increases the adhesiveness to the recording medium by heating may be higher than that of the color ink.

Each configuration of the transfer type ink jet recording apparatus of this embodiment will be described below.

### <Transfer body>

A transfer body 101 includes a surface layer including an image forming surface. As a member of the surface layer, various materials such as a resin and ceramics can be appropriately used, but from the viewpoint of durability and the like, a material having high compression elastic modulus is preferable. Specifically, examples thereof include a condensate obtained by condensing an acrylic resin, an acrylic silicone resin, a fluorine-containing resin, and a hydrolyzable organosilicon compound. In order to improve the wettability and the transferability of the reaction liquid, the surface treatment may be performed before use. Examples of the surface treatment include a frame treatment, a corona treatment, a plasma treatment, a polishing treatment, a roughening treatment, an active energy ray irradiation treatment, an ozone treatment, a surfactant treatment, and a silane coupling treatment. These may be combined in plural. An optional surface shape can also be provided on the surface layer.

Further, it is preferable that the transfer body includes a compressible layer having a function of absorbing pressure variation. When the compressible layer is provided, the compressible layer absorbs the deformation, disperses the variation against local pressure variation, and maintains excellent transferability even during high-speed printing. Examples of members of the compressible layer include acrylonitrile-butadiene rubber, acrylic rubber, chloroprene rubber, urethane rubber, and silicone rubber. It is preferable that a predetermined amount of a vulcanizing agent, a vulcanization accelerator and the like are blended at the time of molding the rubber material, and a porous body is further blended with a filler such as a foaming agent, a hollow fine particle or salt, as necessary. As a result, a bubble portion is compressed with volume change for various pressure fluctuations, so that deformation in a direction other than the compression direction is small and a more stable transferability and the durability can be obtained. As the porous rubber material, there are one having continuous pore structure in which the pores are continuous to each other and one having independent pore structure in which the pores are independently separated from each other. In the present invention, any structure may be used, and these structures may be used in combination.

Further, the transfer body preferably include an elastic layer between the surface layer and the compressible layer. As a member of the elastic layer, various materials such as resin, ceramics and the like can be appropriately used. Various elastomer materials and rubber materials are preferably used from the viewpoint of processing characteristics and the like. Specific examples thereof include fluorosilicone rubber, phenyl silicone rubber, fluororubber, chloroprene rubber, urethane rubber, nitrile rubber, ethylene propylene rubber, natural rubber, styrene rubber, isoprene rubber, butadiene rubber, a copolymer of ethylene/propylene/butadiene, and nitrile butadiene rubber. In particular, silicone rubber, fluorosilicone rubber, and phenyl silicone rubber are preferable in terms of dimensional stability and the durability because of small compression set. In addition, the change in the elastic modulus due to temperature is small, which is also preferable from the viewpoint of transferability.

Various adhesives or double-sided tapes may be used between the layers constituting the transfer body (the surface layer, the elastic layer, and the compressible layer) in order to fix and hold the layers. A reinforcing layer having a high compressive elastic modulus may be provided for suppressing lateral elongation when being mounted on the device and for maintaining elasticity. Further, the woven fabric may be used as a reinforcing layer. The transfer body can be produced by optionally combining each layer by the above-described material.

The size of the transfer body can be freely selected according to the size of the target print image. The shape of the transfer body is not particularly limited, and specifically, examples thereof include a sheet shape, a roller shape, a belt shape, and an endless web shape.

### <Support member>

The transfer body 101 is supported on the support member 102. As a method of supporting the transfer body, various adhesives or double-sided tapes may be used. Alternatively, by attaching an installation member made of a material such as metal, ceramic, and a resin to the transfer body, the transfer body may be supported on the support member 102 using the installation member.

The support member 102 is required to have a certain degree of structural strength from the viewpoint of conveying accuracy and durability. For the material of the support member, metal, ceramic, resin, or the like is preferably used. Among them, in particular, in order to improving responsiveness of control by reducing inertia during operation in addition to rigidity and dimensional accuracy that can withstand pressurization at the time of transfer, aluminum, iron, stainless steel, acetal resin, epoxy resin, polyimide, polyethylene, polyethylene terephthalate, nylon, polyurethane, silica ceramics, alumina ceramics are preferably used. Further, these are preferably used in combination.

### <Reaction liquid applying device>

The ink jet recording apparatus of the present embodiment includes the reaction liquid applying device 103 for applying the reaction liquid to the transfer body 101. The reaction liquid applying device 103 illustrated in Fig. 10 indicates a gravure offset roller which is provided with a reaction liquid storing unit 103a for storing the reaction liquid and a reaction liquid applying members 103b and 103c for applying the reaction liquid in the reaction liquid storing unit 103a onto the transfer body 101.

### <Ink applying device>

The ink jet recording apparatus of the present embodiment includes an ink applying device 104 that applies ink to the transfer body 101 to which the reaction liquid is applied. The first image is formed by mixing the reaction liquid and the ink, and in the subsequent liquid absorbing device 105, the liquid component is absorbed from the first image.

### <Liquid absorbing device>

In this embodiment, the liquid absorbing device 105 includes the liquid absorbing member 105a which is a porous body belt according to the present invention, and a pressing member 105b for liquid absorption which presses the liquid absorbing member 105a against the first image on the transfer body 101. Note that, the shapes of the liquid absorbing member 105a and pressing member 105b are not particularly limited. For example, as illustrated in Fig. 10, a configuration in which the pressing member 105b has a columnar shape, the liquid absorbing member 105a has a belt shape, and the liquid absorbing member 105a having the belt shape is pressed against the transfer body 101 by the pressing member 105b having the columnar shape may be employed. In addition, a configuration in which the pressing member 105b has a columnar shape, the liquid absorbing member 105 a has a columnar shape formed on the peripheral surface of the pressing member 105b having the columnar shape, and the liquid absorbing member 105a having the columnar shape is pressed against the transfer body by the pressing member 105b having the columnar shape may be employed. In the present invention, it is preferable that the liquid absorbing member 105a has the belt shape in consideration of the space and the like in the ink jet recording apparatus. In addition, the liquid absorbing device 105 which includes the liquid absorbing member 105a having such a belt shape may include an extending member for extending the liquid absorbing member 105a. In Fig. 10, reference numerals 105c, 105d and 105e represent an extending roller as the extending member. In Fig. 10, the pressing member 105b is also a roller member that rotates similarly to the extending roller, but the present invention is not limited thereto.

In the liquid absorbing device 105, when the liquid absorbing member 105a including the porous body is pressed to the first image by the pressing member 105b, the second image is obtained by absorbing the liquid component contained in the first image to the liquid absorbing member 105a, and decreasing the liquid component from the first image. As a method of decreasing the liquid components from the first image, in addition to the present method of pressing the liquid absorbing member, other various conventionally used methods, for example, a method of heating, a method of blowing low humidity air, and a method of reducing pressure may be used in combination. Alternatively, these methods may be applied to the second image with decreased liquid component to further decrease the liquid component.

Hereinafter, various conditions and configurations in the liquid absorbing device 105 will be described in detail.

### [Liquid absorbing member]

In this embodiment, at least a portion of the liquid component from the ink image before liquid removal is absorbed and removed by being brought into contact with the liquid absorbing member including the porous body, and thereby the content of the liquid component in the ink image was reduced. The contact surface of the liquid absorbing member with the ink image is set as the first surface, and the porous body is disposed on the first surface. The liquid absorbing member containing such a porous body preferably has a shape which is capable of absorbing the liquid by moving in conjunction with the movement of the ejection receiving medium to be brought into contact with contact with the ink image, and repeatedly circulating the ink image before another liquid removal at a predetermined cycle. For example, an endless belt shape or the like can be exemplified.

In addition, in the cross section of the porous body belt in the longitudinal direction, it is preferable that the penetration width of the welding material A to the body to be connected is wider than the penetration width of the welding material B, and the first surface of the porous body belt contacting the first image is a surface having the connecting material A and the second surface which is the back surface of the first surface of the porous body belt is a surface having the connecting material B. As a result, the penetration width of the welding material A at the connecting portion on the surface in contact with the first image is wide, so that the durability at the connecting portion of the first surface of the porous body belt can be further improved. Further, in the porous body belt which is the liquid absorbing member, the average pore diameter of the first surface of the porous body belt which is configured to be brought into contact with the first image is preferably smaller than the average pore diameter of the second surface which is the back surface of the first surface of the porous body belt. When the average pore diameter of the first surface and the second surface is within the above range, adhesion and penetration of aggregates including the coloring material of the first image to the porous body belt can be further suppressed. Further, since the average pore diameter of the first surface is small, the penetration width of the welding material A at the connecting portion on the surface in contact with the first image can be easily expanded by a capillary force.

### [Porous body]

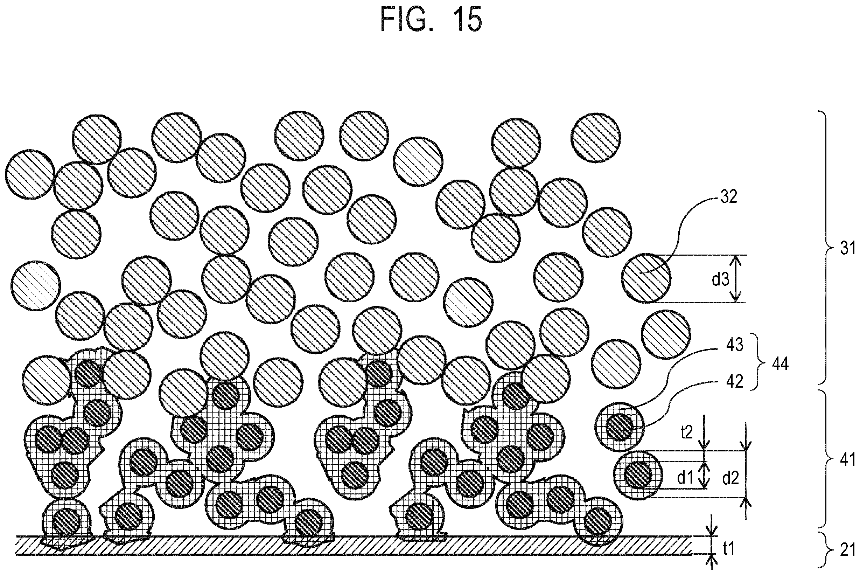

As illustrated in Fig. 15, for example, the belt-shaped porous body which is the liquid absorbing member 105a according to this embodiment preferably has a three-layer structure including a first layer, a second layer, and a third layer. The porous body as illustrated in Fig. 15 includes a first layer 21, a second layer 41 including a second fiber 44, and a third layer 31 including a third fiber 32. The second fiber 44 has a core-sheath structure including a core structure 42 forming a central axis and a sheath structure 43 surrounding the core structure 42. An average fiber diameter d2 of the second fiber 44 is preferably larger than an average fiber diameter d3 of the third fiber 32. An average thickness t2 of the sheath structure 43 is preferably smaller than a thickness t1 of the first layer 21.

The porous body may include other layers besides the first layer, the second layer, and the third layer. The thickness of the body to be connected including the porous body is preferably thin, and can be set to be 50 µm to 500 µm, from the viewpoint of uniformly obtaining high air permeability. Air permeability can be indicated by the Gurley value defined in JIS P8117, and the Gurley value of the porous body is preferably 10 seconds or shorter.

### (1) First layer

The first layer is a layer which is configured to be brought into contact with the first image, and the porous body which is directly in contact with the first image so as to absorb at least a portion of the first liquid from the first image. The material for forming the first layer is not particularly limited, and coloring material, but from the viewpoint of suppressing adhesion of the coloring material and increasing the cleaning property, it is preferable to include a fluororesin having low surface free energy. That is, the first layer preferably contains a fluororesin, and is more preferably formed of a fluororesin. Specific examples of the fluororesin include polytetrafluoroethylene (PTFE), polychlorotrifluoroethylene (PCTFE), polyvinylidene fluoride (PVDF), polyvinyl fluoride (PVF), perfluoroalkoxy fluorine resin (PFA), an ethylene tetrafluoride·propylene hexafluoride copolymer (FEP), an ethylene tetrafluoride ethylene copolymer (ETFE), and an ethylene chlorotrifluoroethylene copolymer (ECTFE). These materials may be used alone or if necessary, one or two or more kinds thereof may be used in combination. In addition, the first layer may have a structure in which a plurality of films having different materials are laminated.

From the viewpoint that the softening point of the material for forming the first layer is higher than the softening point of the material for forming the sheath structure in the second fiber, it is preferably 170°C or higher, is more preferably 180°C or higher, and is still more preferably 200°C or higher. An upper limit of the range of the softening point of the material for forming the first layer is not particularly limited, and for example, it can be set to 350°C or lower. In addition, in a case where the first layer includes a plurality of materials, the softening point is indicated in a state where the first layer includes the plurality of materials.

It is desirable that the material for forming the first layer has flexibility to the extent that no trace remains on the first image, and the Young's modulus of the material is preferably 2.0 GPa or less, is more preferably 1.0 GPa or less, and is still more preferably 0.5 GPa or less. A lower limit of the range of the Young's modulus is not particularly limited, and it may be 0.1 GPa or more. Note that, the Young's modulus in the present invention is a value obtained by measurement through the method defined by JIS K7161.

The average pore diameter on the surface which is configured to be brought into contact with the first image of the first layer is preferably 10.0 µm or smaller, is more preferably 1.0 µm or smaller, and is still more preferably 0.2 µm or smaller, from the viewpoint of suppressing of coloring material adhesion at the time of pressure-contacting the first image. Particularly, when the average pore diameter is 0.2 µm or smaller, the filtering property is increased and the adhesion of the coloring material to the porous body is remarkably suppressed. In the present invention, the "average pore diameter" is an average value of the values obtained by observing the surface of the porous layer with an electron microscope, and measuring 20 or more calculated diameters as diameters in a case where an area of a hole portion of the surface is an area of a circle. The lower limit of the range of the average pore diameter is not particularly limited, and it may be 0.02 µm or larger, for example.

The thickness of the first layer is 50 µm or smaller, is more preferably 30 µm or smaller, is still more preferably 10 µm or smaller, and is particularly preferably 5 µm or smaller. When the thickness is 50 µm or smaller, an increase in the flow resistance can be suppressed, and the smeared image can be suppressed. The lower limit of the range of the thickness is not particularly limited, and it may be 1 µm or larger, for example.

### (2) Second layer

The second layer is a porous layer which adheres the first layer and the third layer. The second layer may include the second fiber and may be formed of the second fiber. Note that, even in a case where a portion of the second fiber is melted, as long as the second fiber remains in a state of being in a fiber shape in the second layer, the second layer is assumed to include the second fiber. The same is true for not only a second fiber a included in a second layer a but also a second fiber b included in a second layer b, which are described below. The second layer may be a nonwoven fabric or a woven fabric. The second fiber has a core-sheath structure including a core structure forming the central axis and a sheath structure surrounding the core structure. Examples of the material for forming the core structure and the material for forming the sheath structure include polyolefin (polyethylene (PE), polypropylene (PP), and the like), polyamide such as polyurethane and nylon, polyester (polyethylene terephthalate (PET) and the like) and polysulfone (PSF). These may be used alone, or two or more kinds thereof may be used in combination.

In addition, the softening point of the material for forming the sheath structure is preferably lower than any of the softening point of the material for forming the core structure, the softening point of the material for forming the first layer, and the softening point of the material for forming the third fiber included in the third layer. With this, at the time of adhering the first to the third layer by heating, it is possible to soften only the material for forming the sheath structure by selecting the heating temperature, and the core structure is not melted, and thereby it is possible to maintain the shape of the second fiber. Accordingly, the entire of the second layer is not melted and collapsed, and thereby it is possible to prevent the second layer from being collapsed. In addition, the softening point of the material for forming the sheath structure is preferably at least 5°C, and is more preferably at least 10°C lower than any of the softening point of the material for forming the core structure, the softening point of the material for forming the first layer, and the softening point of the material for forming the third fiber included in the third layer.

The softening point of the material for forming the core structure is preferably 140°C or higher, and is more preferably 150°C or higher. An upper limit of the range of the softening point of the material for forming the core structure is not particularly limited, and for example, it can be set to be 180°C or lower. The softening point of the material for forming the sheath structure is preferably lower than 140°C, and is more preferably 130°C or lower. A lower limit of the range of the softening point of the material for forming the sheath structure is not particularly limited, and for example, it can be set to be 110°C or higher.

The Young's modulus of the material for forming the core structure is preferable 0.1 GPa to 3.0 GPa from the viewpoint of transportability. In addition, the Young's modulus of the material for forming the sheath structure is preferably 0.1 GPa to 3.0 GPa, from the viewpoint of transportability. The average thickness of the sheath structure is preferably smaller than the thickness of the first layer. The thickness of the second layer is preferably 10 to 500 µm from the viewpoint of transportability.

### (3) Third layer

The third layer is a porous layer that enhances the rigidity of the liquid absorbing member. The third layer may include the third fiber and may be formed of the third fiber. The third layer may be a nonwoven fabric or a woven fabric. Examples of the material forming the third fiber include polyphenylene sulfide (PPS), polyimide, and polyethylene terephthalate (PET). These may be used alone, or two or more kinds thereof may be used in combination. However, from the viewpoint that the Young's modulus is high and the conveying strength can be enhanced as described below, it is preferable the third fiber includes polyphenylene sulfide (PPS) or polyimide.

The softening point of the material for forming the third fiber is preferably 150°C or higher, is more preferably 170°C or higher, and is still more preferably 200°C or higher. An upper limit of the range of the softening point of the material for forming the third fiber is not particularly limited, and for example, it can be set to be 350°C or lower.

From the viewpoint that Young's modulus of a material for forming the third fiber enhances the conveying strength, and secures the rigidity, it is preferably more than the Young's modulus of the material for forming the first layer. The Young's modulus of a material for forming the third fiber is preferably 1.0 GPa or more, and is more preferably 2.0 GPa or more than the Young's modulus of the material for forming the first layer. The Young's modulus of a material for forming the third fiber is preferably 2.0 GPa or more, is more preferably 2.5 GPa or more, is still more preferably 3.0 GPa or more. An upper limit of the range of the Young's modulus is not particularly limited, and it may be 5.0 GPa or less. The third layer formed of the material having the Young's modulus roughly determines the rigidity of the porous body belt at last. A tension of about 2.5 mN/mm to 10.0 mN/mm is applied to the porous body belt at the time of conveyance for stable conveyance. At that time, when the elongation of the porous body belt is large, it is impossible to secure conveyance stability against tension variation or the like. In order to secure the conveyance stability, in the range of 2.5 mN/mm to 10.0 mN/mm, it is preferable to suppress the elongation to 2% or less in the range of elastic deformability. The elongation in the range of tension and elastic deformability is a value measured by "Autograph AG-X" (trade name) manufactured by Shimadzu Corporation.

From the viewpoint that the thickness of the third layer enhances the conveying strength, and secures the rigidity, it is preferably 50 µm to 500 µm, is more preferably 100 µm or larger to 400 µm or smaller, and is still more preferably 150 µm to 300 µm. From the viewpoint that the average fiber diameter of the third fiber is smaller than the average fiber diameter of the second fiber, it is preferably 2 µm to 15 µm, and is more preferably 5 µm to 10 µm.

### [Pretreatment]

In the present embodiment, a pretreatment is preferably performed by a pretreatment device (not shown in Fig. 10) for applying a treatment liquid to the liquid absorbing member before bringing the liquid absorbing member 105a including the porous body into contact with the first image. The treatment liquid used in the present invention preferably contains water and a water-soluble organic solvent. Water is preferably deionized water by ion exchange or the like. Further, the types of the water-soluble organic solvents to be used are not particularly limited, and any of known organic solvents such as ethanol and isopropyl alcohol can be used. In the pretreatment of the liquid absorbing member used in the present invention, the application method to the porous body is not particularly limited, and immersion and liquid droplet dripping are preferable.

### [Pressurizing condition]

When the pressure of the liquid absorbing member pressure-contacting against the first image on the transfer body is equal to or greater than 2.9 N/cm² (0.3 kgf/cm²), the liquid in the first image can be solid-liquid separated in a shorter time period, and the liquid component can be removed from the first image, which is preferable. Further, when the pressure is equal to or lower than 98 N/cm² (10 kgf/cm²), the structural load on the apparatus can be suppressed, which is preferable. Note that, in the present specification, the pressure of the liquid absorbing member indicates a nip pressure between the ink receiving medium and the liquid absorbing member, and surface pressure measurement was performed by using a surface pressure distribution measuring device (I-SCAN (trade name), NITTA Corporation) the weight in the pressurized region was divided by the area, and the value was calculated.

### [Application time]

It is preferable that the action time of bringing the liquid absorbing member 105a into contact with the first image is within 50 ms (milliseconds) in order to further suppress the adhesion of the coloring material to the liquid absorbing member in the first image. Incidentally, the action time in the present specification is calculated by dividing a pressure sensing width in the moving direction of the ink receiving medium by the moving speed of the ink receiving medium in the surface pressure measurement described above. Hereinafter, this action time is referred to as a liquid absorption nip time.

In this way, on the transfer body 101, the liquid component is absorbed from the first image and a second image with reduced liquid content is formed. The second image is then transferred onto the recording medium 108 at the transfer unit. A device configuration and conditions at the time of transfer will be described.

### <Pressing member for transferring>

In the present embodiment, while the second image and the recording medium 108 conveyed by the conveyance device 107 for the recording medium are in contact with each other, the pressing member 106 for transferring presses the recording medium 108, and thereby an ink image is transferred onto the recording medium 108. When removing the liquid component contained in the first image on the transfer body 101, and then transferring it onto the recording medium 108, it is possible to obtain a recorded image in which curling, cockling, and the like are suppressed.

The pressing member 106 is required to have a certain degree of structural strength from the viewpoint of conveying accuracy and durability of the recording medium 108. For the material of the pressing member 106, metal, ceramic, resin, or the like is preferably used. Among them, in particular, in order to improving responsiveness of control by reducing inertia during operation in addition to rigidity and dimensional accuracy that can withstand pressurization at the time of transfer, aluminum, iron, stainless steel, acetal resin, epoxy resin, polyimide, polyethylene, polyethylene terephthalate, nylon, polyurethane, silica ceramics, alumina ceramics are preferably used. Further, these may be used in combination.

The pressing time of the pressing member 106 for transferring the second image on the transfer body 101 onto the recording medium 108 is not particularly limited, and in order not to impair the transferability and the durability of the transfer body, it is preferably 5 ms (millisecond) to 100 ms (millisecond). In the present embodiment, the pressure contact time indicates the time during which the recording medium 108 and the transfer body 101 are in contact with each other, and the value of the time is calculated by performing the surface pressure measurement by using the surface pressure distribution measuring device (I-SCAN, manufactured by NITTA Corporation), and dividing the length in the conveying direction of the pressure region by the conveying speed.

The pressure pressed by the pressing member 106 for transferring the second image on the transfer body 101 onto the recording medium 108 is not particularly limited as long as the transfer is performed well and the transferability and the durability of the transfer body is not impaired. Therefore, it is preferable that the pressure is 9.8 N/cm² (1 kg/cm²) or larger to 294.2 N/cm² (30 kg/cm²) or lower. Incidentally, the pressure in the present embodiment indicates the nip pressure between the recording medium 108 and the transfer body 101, and the value of the pressure is calculated by performing the surface pressure measurement by the surface pressure distribution measuring device, and dividing the load in the pressure region by the area.

The temperature at which the pressing member 106 presses for transferring the second image on the transfer body 101 onto the recording medium 108 is also not particularly limited, and it is preferably equal to or higher than a glass transition point or equal to or higher than a softening point of a resin component contained in the ink. For heating, it is preferable to provide a heating device for heating a second image on the transfer body 101, the transfer body 101 and the recording medium 108. The shape of the pressing member 106 is not particularly limited, but for example, a roller shape can be mentioned.

### <Recording medium and conveyance device for recording medium>

In the present embodiment, the recording medium 108 is not particularly limited, any of known recording media can be used. As the recording medium, a long object wound in a roll shape or a sheet material cut into a predetermined size can be exemplified. Examples of the materials include paper, a plastic film, a wood board, a cardboard, and a metal film.

In Fig. 10, the conveyance device 107 for recording medium for conveying the recording medium 108 is constituted by a feeding roller 107a for recording medium and a winding roller 107b for recording medium, but it is not particularly limited thereto as long as the recording medium can be conveyed.

### <Control system>

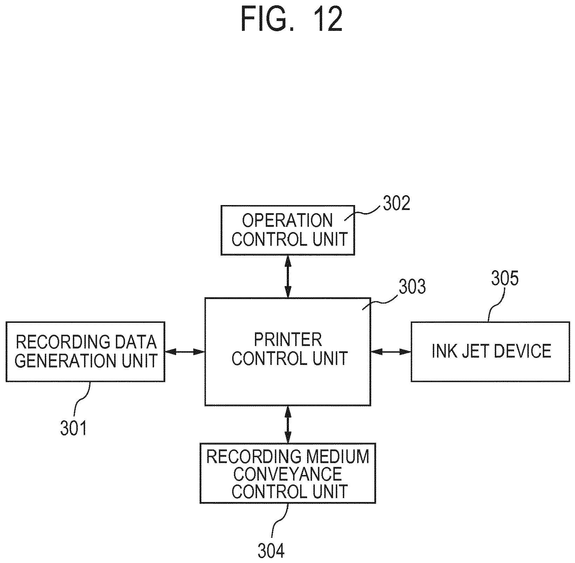

The direct transfer-type ink jet recording apparatus in the present embodiment has a control system for controlling each device. Fig. 12 is a block diagram illustrating a control system of the entire apparatus in the transfer type ink jet recording apparatus illustrated in Fig. 10. In Fig. 12, a reference numeral 301 represents a recording data generation unit such as an external print server, a reference numeral 302 represents an operation control unit such as an operation panel, a reference numeral 303 represents a printer control unit for executing a recording process, a reference numeral 304 represents a recording medium conveyance control unit for conveying the recording medium, and a reference numeral 305 represents an ink jet device for printing.

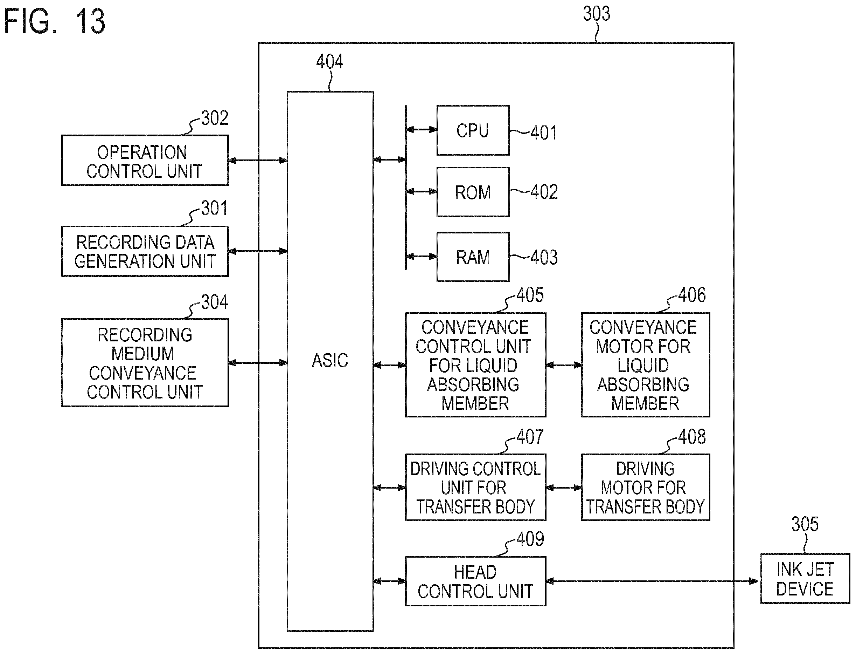

Fig. 13 is a block diagram of a printer control unit of the entire apparatus in the transfer type ink jet recording apparatus illustrated in Fig. 10. Reference numeral 401 represents a CPU for controlling the entire printer, a reference numeral 402 represents a ROM for storing the control program of the CPU, and a reference numeral 403 represents a RAM for executing the program. A reference numeral 404 represents an application specific integrated circuit (ASIC) including a network controller, a serial IF controller, a controller for generating head data, a motor controller, and the like. A reference numeral 405 represents a conveyance control unit for liquid absorbing member for driving a conveyance motor for liquid absorbing member 406, and commands are similarly controlled from the ASIC 404 via the serial IF. A reference numeral 407 represents a driving control unit for transfer body that drives a motor 408 for transfer body, and similarly, commands are similarly controlled from the ASIC 404 via the serial IF. A reference numeral 409 represents a head control unit which performs final discharge data generation of the ink jet device 305, and drives voltage generation and the like.

### <Direct drawing type ink jet recording apparatus>

As another embodiment of the present invention, a direct drawing type ink jet recording apparatus can be mentioned. In the direct drawing type ink jet recording apparatus, the ink receiving medium is a recording medium so as to form an image.

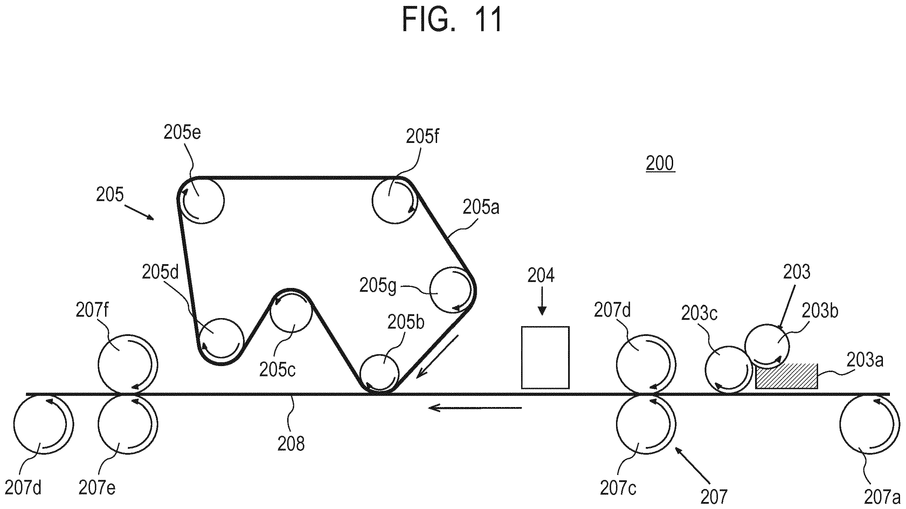

Fig. 11 is a schematic diagram illustrating one example of a schematic configuration of a direct drawing type ink jet recording apparatus 200 of the present embodiment. Compared to the transfer type ink jet recording apparatus described above, the direct drawing type ink jet recording apparatus has a the same member as that of the transfer type ink jet recording apparatus except that it does not have the transfer body 101, the support member 102, and the cleaning member 109 for transfer body, and forms an image on a recording medium 208.

Therefore, by means of a reaction liquid applying device 203 for applying the reaction liquid to the recording medium 208, an ink applying device 204 for applying ink to the recording medium 208, and a liquid absorbing member 205a being brought into contact with a first image on the recording medium 208, a liquid absorbing device 205 that absorbs the liquid component contained in the first image has the same configuration as that of the transfer type ink jet recording apparatus, and thus explanation thereof will not be described.

Note that, in the direct drawing type ink jet recording apparatus of the present embodiment, the liquid absorbing device 205 includes the liquid absorbing member 205a which is the porous body belt according to the present invention, and a pressing member 205b for liquid absorption which presses the liquid absorbing member 205a against the first image on the recording medium 208. In addition, the liquid absorbing device 205 may include an extending member for extending the liquid absorbing member. In Fig. 11, reference numerals 205c, 205d, 205e, 205f and 205g represent an extending roller as the extending member. The number of the extending rollers is not limited to five, and a necessary number of the extending rollers may be arranged according to the apparatus design.

A recording medium support member (not shown) for supporting the recording medium from below may be provided at a printing unit for applying ink to the recording medium 208 by the ink applying device 204 and a liquid component removing unit for pressing the aqueous liquid absorbing member 205a against the first image on the recording medium to remove the liquid component.

### <Conveyance device for recording medium>

In the direct drawing type ink jet recording apparatus of the present embodiment, the conveyance device for recording medium 207 is not particularly limited, and a conveyance device in the known direct drawing type ink jet recording apparatus can be used. Examples thereof include, as illustrated in Fig. 11, a conveyance device for recording medium including a feeding roller 207a for recording medium, a winding roller 207b for recording medium, and conveyance rollers 207c, 207d, 207e and 207f for recording medium.

### <Control system>

The direct drawing type ink jet recording apparatus in the present embodiment has a control system for controlling each device. The block diagram illustrating a control system of the entire apparatus in the direct drawing type ink jet recording apparatus illustrated in Fig. 11 is as illustrated in Fig. 12 similar to the transfer type ink jet recording apparatus illustrated in Fig. 10.

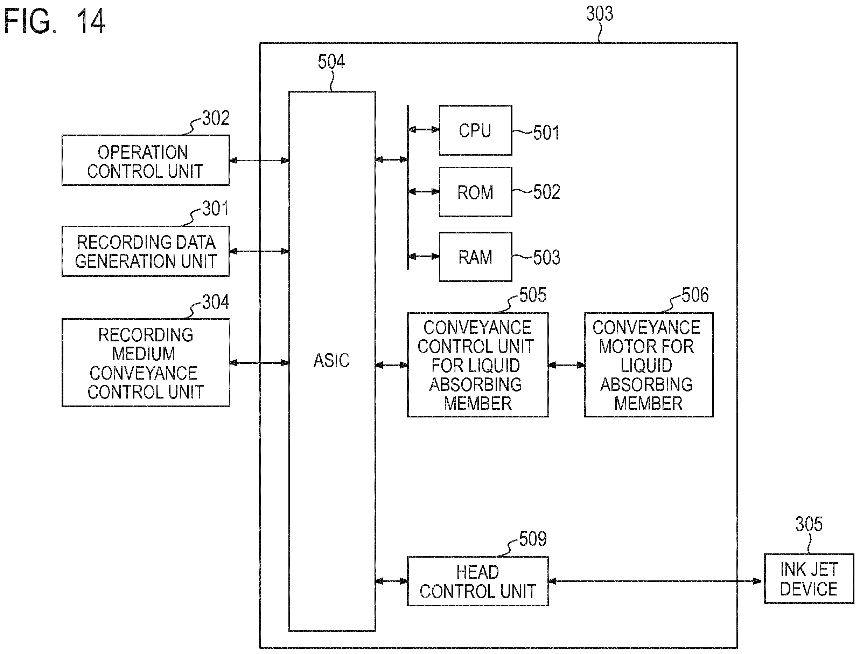

Fig. 14 is a block diagram of a printer control unit in the direct drawing type ink jet recording apparatus illustrated in Fig. 11. Except for not including the driving control unit 407 for transfer body and the driving motor 408 for transfer body, Fig. 14 is the same block diagram as the block diagram of the printer control unit in the transfer type ink jet recording apparatus in Fig. 13. In other words, reference numeral 501 represents a CPU for controlling the entire printer, a reference numeral 502 represents a ROM for storing the control program of the CPU, and a reference numeral 503 represents a RAM for executing the program. A reference numeral 504 represents an ASIC including a network controller and the like, a serial IF controller, a controller for generating head data, and a motor controller. A reference numeral 505 represents a conveyance control unit for liquid absorbing member for driving a conveyance motor for liquid absorbing member 506, and commands are similarly controlled from the ASIC 504 via the serial IF. A reference numeral 509 represents a head control unit which performs final discharge data generation of the inkjet device 305, and drives voltage generation and the like.

### [Examples]

Hereinafter, the present invention will be more specifically described with reference to examples. The present invention is not limited by the following examples without departing from the gist thereof. In the description of the following examples, "part" is on a mass basis unless otherwise specified.

### [Example 1]

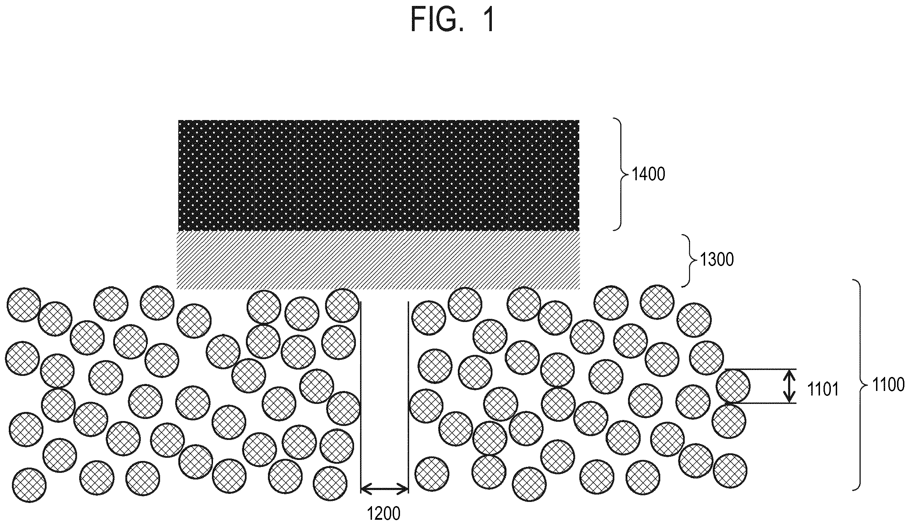

First, as illustrated in Fig. 1, a welding material A1300 and a connecting material A1400 were disposed on a body to be connected 1100 so as to span a gap 1200 between end portions of the bodies to be connected 1100 to obtain a laminate. Specifically, 7.5 mm of the bodies to be connected 1100 was overlapped on each side from a position serving as a connecting portion of the body to be connected 1100, and are fixed with a weight of 10 mm width to the outside away from the left and right by 20 mm from a position serving as a connecting portion. Thereafter, the central portion of the position serving as the connecting portion was cut with a roll cutter, and two pieces of 7.5 mm wide slits were removed. Next, the welding material A1300 and the connecting material 1400 are preliminarily laminated and cut into a tape shape having a width of 800 mm in a longitudinal direction and 8 mm in the traverse direction, and this is cut and disposed on the body to be connected 1100 so as to span the gap 1200 between the end portions of the body to be connected 1100. At this time, the welding material A and the connecting material A were arranged so that the tape-shaped laminate had a width of 8 mm along the longitudinal direction of the body to be connected.

As the body to be connected 1100, a nonwoven fabric (trade name: TORUKON, manufactured by Toray Industries, Inc.) made of polyphenylene sulfide (PPS) fiber having a diameter 1101 of 10 µm was used. The film thickness of the nonwoven fabric was 215 µm, the porosity was 60%, and the softening point of the PPS was 285°C. The film thickness was obtained by measuring the film thickness of optional 10 points with a straight type micrometer (trade name, OMV-25, manufactured by Mitutoyo Corporation) and calculating the average value thereof. Also, in Fig. 1, a fiber direction is illustrated to be aligned perpendicular to the paper surface direction so that a fiber cross section and a void can be expressed, but a line direction is random in the actual nonwoven fabric. As the welding material A1300, a film made of polyethylene (PE) having a film thickness of 100 µm was used. The softening point of the PE is 100°C to 120°C, and is lower than the softening point of the PPS. As the connecting material A1400, a film made of polypropylene (PP) having a film thickness of 200 µm was used. The softening point of the PP is 160°C, and is higher than the softening point of the PE.

Next, in the apparatus illustrated in Fig. 9, the laminate was disposed between the stage 1500 and the pressure block 1700, and pressed and fixed. Thereafter, the laminate was heated at 155°C for 10 minutes. Thereafter, the laminate was cooled to 25°C, and the pressure was released so as to obtain a porous body belt. When the cross section of the porous body belt was observed with an optical microscope and a scanning electron microscope (SEM), as illustrated in Fig. 2, the PE constituting the welding material A1300 penetrated into the void portion of the body to be connected 1100 so as to be brought into close contact with the fiber. In addition, the welding material A1300 and the connecting material A1400 were in close contact with each other.

The porous body belt was subjected to a tensile test and a bending test. The tensile test and the bending test were specifically described as follows.

### (Tensile test)

Eleven pieces of the connecting portions of the porous body belt were cut out so as to form a strip form shape having a length of 150 mm in the longitudinal direction and a length of 15 mm in the transverse direction of the porous body belt so that the connecting portion of the porous body belt was located at the center. The cut porous body belt was used as a sample. Each sample was subjected to a tensile test.

For the tensile test, a tensile tester (trade name: AGS-X, manufactured by Shimadzu Corporation) was used. The above sample was disposed in the tensile tester so that the connecting portion was positioned at the center of the grip-to-grip distance of 50 mm, pulled at a pulling rate of 20 mm/min, and a load at the time of breakage was recorded as tensile strength. This tensile test was performed on eleven samples to obtain an average value, a maximum value, and a minimum value of the tensile strength.

In the porous body belt of Example 1, the average value of the tensile strength was 5.8 N/mm, the maximum value was 7.0 N/mm, and the minimum value was 4.2 N/mm.

### (Bending test)

Eleven pieces of the connecting portions of the porous body belt were cut out so as to form a strip form having a length of 150 mm in the longitudinal direction and a length of 15 mm in the transverse direction of the porous body belt so that the connecting portion of the porous body belt was located at the center. The cut porous body belt was used as a sample. Each sample was subjected to a bending test.

For the bending test, a MIT folding endurance fatigue tester 0530DA (trade name, manufactured by Toyo Seiki Seisaku-sho, Ltd.) was used. Using this test specimen, a bending test was carried out based on JIS P 8115. The specific procedure of the bending test is as follows.

While pulling the sample with a tension of 1.0 kgf/cm² (98 kPa), it was confirmed whether or not the sample was broken when the repeated bending with bending of R = 1 mm and an angle of 90° was applied to the connecting portion 10,000 times. In a case where the sample was broken, the number of breakages indicating the number of bending until the breakage was measured for each of 11 samples, and thereby the average value was determined. Further, in a case where the sample was not broken even after the bending was carried out up to 10,000 times, the above tensile strength was further measured using the sample after 10,000 times of bending.

In the bending test of the porous body belt of Example 1, there was no breakage even if the bending was carried out up to 10,000 times. Then, when the tensile strength was measured using the sample bent up to 10,000 times, the average value of the tensile strength was 3.9 N/mm, the maximum value was 5.4 N/mm, and the minimum value was 2.9 N/mm.

### [Example 2]

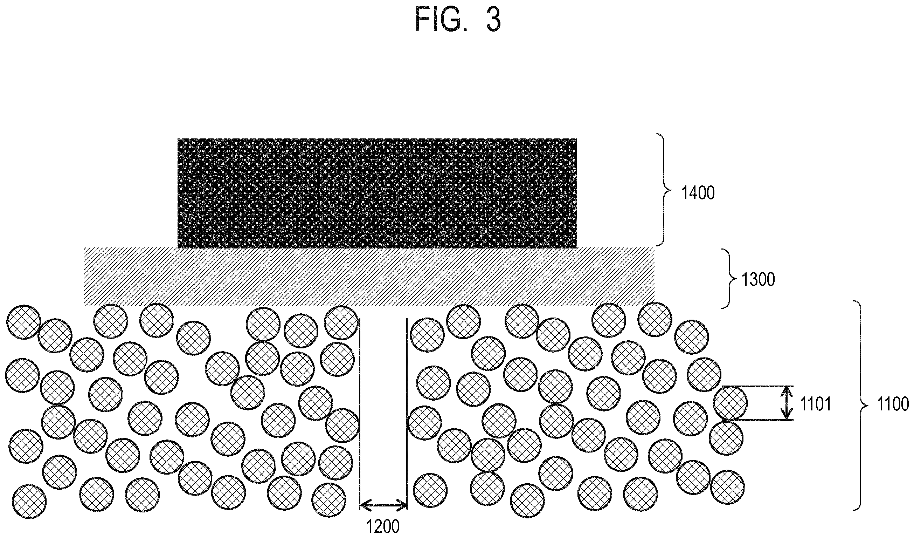

When the laminate was produced in Example 1, the welding material A1300 and the connecting material A1400 were not laminated in advance, but are laminated separately. Further, the width of the tape-shaped welding material A 1300 was set to be 800 mm in the longitudinal direction and 10 mm in the transverse direction, and the width of the connecting material A1400 was set to be 800 mm in the longitudinal direction and 8 mm in the transverse direction (Fig. 3). A porous body belt was produced in the same manner as in Example 1 except for these. When the cross section of the porous body belt was observed with an optical microscope and the SEM, as illustrated in Fig. 4, the PE constituting the welding material A1300 penetrated into the void portion of the body to be connected 1100 so as to be brought into close contact with the fiber. In addition, the welding material A1300 and the connecting material A1400 were in close contact with each other. Further, in the cross section of the porous body belt in the longitudinal direction, the penetration width 1301 to the body to be connected 1100 of the welding material A1300 was wider than the width 1401 of the connecting material A1400. Similar to Example 1, the porous body belt was subjected to a tensile test and a bending test. In the porous body belt of Example 2, the average value of the tensile strength was 5.8 N/mm, the maximum value was 7.0 N/mm, and the minimum value was 4.2 N/mm. In the bending test, there was no breakage even if the bending was carried out up to 10,000 times. Then, when the tensile strength was measured using the sample bent up to 10,000 times, the average value of the tensile strength was 4.4 N/mm, the maximum value was 5.9 N/mm, and the minimum value was 3.6 N/mm.

### [Example 3]

As the connecting material A1400, a porous body belt was produced in the same manner as that of Example 2 except that those having the thickness of the same nonwoven fabric as the body to be connected 1100 (trade name: TORUKON, manufactured by Toray Industries, Inc.) set to be 100 µm. When the cross section of the porous body belt was observed with an optical microscope and the SEM, as illustrated in Fig. 5, the PE constituting the welding material A1300 penetrated into the void portion of the body to be connected 1100 be brought into close contact with the fiber. In addition, the PE constituting the welding material A1300 penetrated into the void portion of the connecting material A1400 so as to be brought into close contact with the fiber. Further, in the cross section of the porous body belt in the longitudinal direction, the penetration width 1301 to the body to be connected 1100 of the welding material A1300 was wider than the width 1401 of the connecting material A1400. Similar to Example 1, the porous body belt was subjected to a tensile test and a bending test. In the porous body belt of Example 3, the average value of the tensile strength was 5.0 N/mm, the maximum value was 6.5 N/mm, and the minimum value was 3.9 N/mm. In the bending test, there was no breakage even if the bending was carried out up to 10,000 times. Then, when the tensile strength was measured using the sample bent up to 10,000 times, the average value of the tensile strength was 4.6 N/mm, the maximum value was 6.0 N/mm, and the minimum value was 3.4 N/mm.

### [Example 4]

When the laminate was produced in Example 3, the same welding material B1310 as the welding material A1300 was disposed at a position facing the welding material A1300, which is on a surface of the body to be connected 1100 opposite to the surface on which the welding material A1300 and the connecting material A1400 are arranged. A porous body belt was produced in the same manner as in Example 3 except for these. When the cross section of the porous body belt was observed with an optical microscope and the SEM, as illustrated in Fig. 6, the PE constituting the welding material A1300 and the welding material B1310 each of which penetrated into the void portion of the body to be connected 1100 so as to be brought into close contact with the fiber. In addition, the PE constituting the welding material A1300 penetrated into the void portion of the connecting material A1400 so as to be brought into close contact with the fiber. Further, in the cross section of the porous body belt in the longitudinal direction, the penetration width 1301 to the body to be connected 1100 of the welding material A1300 was wider than the width 1401 of the connecting material A1400. In the porous body belt of Example 4, the average value of the tensile strength was 8.9 N/mm, the maximum value was 10.2 N/mm, and the minimum value was 6.9 N/mm. In the bending test, there was no breakage even if the bending was carried out up to 10,000 times. Then, when the tensile strength was measured using the sample bent up to 10,000 times, the average value of the tensile strength was 7.9 N/mm, the maximum value was 9.0 N/mm, and the minimum value was 6.4 N/mm.

### [Example 5]

A porous body belt was produced in the same manner as that of Example 4 except that linear low molecular weight polyethylene (softening point: 110°C) having a film thickness of 50 µm was used as the welding materials A and B and a biaxially oriented polypropylene film (softening point: 165°C) having a film thickness of 20 µm was set as the connecting materials A and B, each of the welding material A, the connecting material A, and the welding material B, and the connecting material B was laminated in advance and was cut into the width of 800 mm in the longitudinal direction and 10 mm in the transverse direction, the welding material A and the connecting material A were laminated to be arranged on the surface of the end portion of the body to be connected, the welding material B and the connecting material B were laminated to be arranged on the back surface of the end portion of the body to be connected, and the heating temperature when forming the connecting portion was set to be 140°C.

Similar to Example 1, the porous body belt was subjected to a tensile test and a bending test. In the porous body belt of Example 5, the average value of the tensile strength was 11.2 N/mm, the maximum value was 12.4 N/mm, and the minimum value was 9.4 N/mm. In the bending test, there was no breakage even if the bending was carried out up to 10,000 times. Then, when the tensile strength was measured using the sample bent up to 10,000 times, the average value of the tensile strength was 8.6 N/mm, the maximum value was 9.4 N/mm, and the minimum value was 7.9 N/mm.

### [Comparative Example 1]

Two adhesive tapes (trade name: HF-105P, manufactured by Nitto Denko Corporation) were adhered on both the front and back surfaces at both end portions of the body to be connected so as to span the gap between the end portions of the body to be connected on the body to be connected used in Example 1, thereby producing a porous body belt. When the cross section of the porous body belt was observed with an optical microscope and a scanning electron microscope (SEM), the adhesive tape was adhered on the surface of the body to be connected, and no penetration of the material into the voids of the porous body of the body to be connected was observed. Similar to Example 1, the porous body belt was subjected to a tensile test and a bending test. In the porous body belt of Comparative Example 1, the average value of the tensile strength was 1.6 N/mm, the maximum value was 3.4 N/mm, and the minimum value was 0.8 N/mm. In addition, in the bending test, at the stage where 3000 times of bending were performed, the tape peeled off at the connecting portion of the porous body belt.

### [Comparative Example 2]

The surface of one end portion of the body to be connected used in Example 1 was overlapped with the back surface of the other end portion with a width of 8 mm and the front surface and the back surface of the end portion were adhered to a double-sided adhesive tape (trade name: 5000 NS, manufactured by Nitto Denko Corporation) so as to produce a porous body belt. Similar to Example 1, the porous body belt was subjected to a tensile test and a bending test. In the porous body belt of Comparative Example 2, the average value of the tensile strength was 5.8 N/mm, the maximum value was 7.0 N/mm, and the minimum value was 4.2 N/mm. In addition, in the bending test, at the stage where 4000 times of bending were performed, the tape peeled off at the connecting portion of the porous body belt.

### [Example 6]

### <Preparing of reaction liquid>

For the reaction liquid, a reaction liquid having the composition indicated below was used. Note that, the remainder of the ion exchanged water is an amount such that the total of all components constituting the reaction liquid is 100.0% by mass.
- Glutaric acid: 21.0% by mass
- Glycerin: 5.0% by mass
- Surfactant (MEGAFAC F444 (trade name), manufactured by DIC Corporation): 5.0 % by mass
- Ion exchanged water: remainder

### <Preparing of pigment dispersion>

10 parts of carbon black (Monarch 1100 (trade name), manufactured by Cabot Corporation), 15 parts of aqueous resin solution (obtained by neutralizing a styrene-ethyl acrylate-acrylic acid copolymer and an aqueous solution having an acid value of 150, a weight average molecular weight (Mw) of 8,000, and a resin content of 20.0% by mass with an aqueous potassium hydroxide solution), and 75 parts of pure water were mixed. The mixing liquid was charged into a batch type vertical sand mill (manufactured by AIMEX CO., Ltd.), the batch type vertical sand mill was filled with 200 parts of zirconia beads having a diameter of 0.3 mm, and a dispersion treatment was performed for five hours while cooling with water. When the dispersion was centrifuged to remove coarse particles, a pigment dispersion having a pigment content of 10.0% by mass was obtained.

### <Preparing of resin fine particle dispersion>

20 parts of ethyl methacrylate, 3 parts of 2,2'-azobis-(2-methyl butyronitrile), and 2 parts of n-hexadecane were mixed and stirred for 0.5 hours. This mixture was added dropwise to 75 parts of an 8% by mass of aqueous solution of a styrene-butyl acrylate-acrylic acid copolymer (acid value: 130 mgKOH/g, weight average molecular weight (Mw): 7,000), and stirred for 0.5 hours. Next, ultrasonic waves were irradiated by an ultrasonic irradiator for three hours. Subsequently, a polymerization reaction was performed at 80°C for four hours in a nitrogen atmosphere, and after cooling at room temperature, filtration was performed so as to prepare a resin fine particle dispersion having a resin content of 25.0% by mass.

### <Preparing of ink>

The pigment dispersion and the resin fine particle dispersion were mixed with each of the following components. Note that, the "remainder" of the ion exchanged water is an amount such that the total of all components constituting the ink is 100.0% by mass.
- Pigment dispersion: 40.0% by mass
- Resin fine particle dispersion: 20.0% by mass
- Glycerin: 7.0% by mass
- Polyethylene glycol (number average molecular weight (Mn): 1,000): 3.0% by mass
- Surfactant: acetylenol E100 (trade name, manufactured by Kawaken Fine Chemicals Co., Ltd.): 0.5% by mass
- Ion exchanged water: remainder

After sufficiently stirring and dispersing the mixture, pressure filtration was performed with a microfilter (manufactured by FUJIFILM Corporation) having a pore diameter of 3.0 µm so as to prepare ink.

### <Producing of body to be connected>

As the first layer, a multiaxially stretched film which consists of the porous body made of polytetrafluoroethylene (PTFE) having an average pore diameter of 0.2 µm on the surface of the side in contact with the first image was used. The first layer was prepared by a method of obtaining a porous body fibrillated by compression molding crystallized PTFE emulsion polymerized particles and multiaxially stretching at a temperature equal to or lower than the melting point of PTFE. In addition, the softening point of the PTFE was 320°C.

As the second layer, HOP series (trade name, manufactured by Hirose Paper Mfg. Co., Ltd.) including a second fiber having a core structure made of polypropylene (PP) and a sheath structure made of polyethylene (PE) was used. The softening point of the PE was 100°C to 120°C. The second layer includes the second layer a including the second fiber a, and the second layer b including the second fiber b. The average fiber diameter of the second fiber a is 5 µm, the average fiber diameter of the second fiber b is 15 µm, the second fiber a included in the second layer a disposed on the first layer side is set to be thinner, and the second fiber b included in the second layer b disposed on the third layer side is set to be thicker.

As the third layer, a nonwoven fabric (trade name: PPS paper, manufactured by Hirose Paper Mfg. Co., Ltd.) prepared by wet-making a polyphenylene sulfide (PPS) fiber (trade name: TORUKON, manufactured by Toray Industries, Inc.) was used. The average pore diameter of the third layer was 20 µm. The average pore diameter of the second surface, which is the back surface of the first surface on the side in contact with the first image, is also 20 µm.

The first to third layers were welded by the apparatus illustrated in Fig. 9. Specifically, after the first layer and the second layer were laminated, the third layer was further laminated so as to produce a body to be connected including the porous body. In each lamination step, the heating temperature was adjusted to be between 140°C to 150°C.

### <Producing of porous body belt>

The body to be connected was cut to a predetermined length and set in the apparatus as illustrated in Fig. 9. At this time, the third layer was set to be on stage 1500 side. Also, when setting in the apparatus illustrated in Fig. 9, 15 mm of the body to be connected was overlapped and fixed with a fixed weight 1600 so as not to move, and the center of the overlapped part was cut with a roll cutter. The cut end after cutting was removed and the welding material A1300 and the connecting material 1400 were laminated in this order so as to cover the connected portion without moving the fixed weight 1600. As the welding material A1300, those obtained by cutting out the second layer into a tape shape were used. Further, as the connecting material A1400, those obtained by cutting out the first layer into a tape shape were used. Thereafter, the pressure block 1700 is brought into close contact with the connecting material A1400 so as to cover the entire area of the welding material A1300 and the connecting material A1400. The heater was controlled so that the heating temperature of a part sandwiched between the stage 1500 and the pressure block 1700 was 160°C. The pressure block 1700 and the fixed weight 1600 were removed after a heating time of 10 minutes, a holding time of 10 minutes, and a cooling time of 30 minutes so as to obtain a porous body belt.

### <Ink jet recording apparatus and image formation>

The porous body belt was incorporated in the transfer type ink jet recording apparatus illustrated in Fig. 10. The transfer body 101 was fixed to the support member 102 by double-sided tape. A coated sheet obtained by coating a PET sheet having a thickness of 0.5 mm with silicone rubber (KE12 (trade name), manufactured by Shin-Etsu Chemical Co., Ltd.) by a thickness of 0.3 mm was used as an elastic layer of the transfer body 101. Further, a mixture of a condensation product obtained by mixing glycidoxypropyl triethoxy silane and methyl triethoxy silane at a molar ratio of 1:1, and heating under reflux, and a photo cationic polymerization initiator (SP 150 (produce name), manufactured by ADEKA) was prepared. An atmospheric pressure plasma treatment was performed on the elastic layer surface so that the contact angle of water on the surface of the elastic layer is equal to or smaller than 10 degrees. Thereafter, the mixture was applied onto the elastic layer to form a film by performing UV irradiation (high pressure mercury lamp, integrated exposure amount 5,000 mJ/cm²) and thermal curing (150°C for two hours), so that a transfer body 101 in which a surface layer having a thickness of 0.5 µm was formed on the elastic layer was produced. Note that, the surface of the transfer body 101 was kept at 60°C by heating device (not shown).

The applying amount of the reaction liquid by the reaction liquid applying device 103 was set to be 1 g/m². An ink applying device 104 used an ink jet recording head of the type which discharges ink by an on-demand method using an electrothermal conversion element. The applying amount of the ink at the time of image formation was set to 20 g/m².

The porous body belt was used as the liquid absorbing member 105a and the first surface of the porous body belt was installed to be brought into contact with the transfer body. In addition, the pressure is applied by the pressing member 105b so that the average nip pressure between the transfer body 101 and the liquid absorbing member 105a was set to be 2 kg/cm². The diameter of the pressing member 105b for liquid absorbing was 200 mm.

The conveyance speed of the liquid absorbing member 105a is adjusted by extending rollers 105c, 105d, and 105e which extend and convey the liquid absorbing member 105a such that the speed is the same as the moving speed of the transfer body 101. Further, in order to obtain a speed equal to the moving speed of the transfer body 101, the recording medium 108 is conveyed by the feeding roller for recording medium 107a and the winding roller for recording medium 107b. The conveyance speed of the recording medium 108 was set to be 0.2 m/s. As the recording medium 108, Aurora coated paper (manufactured by Nippon Paper Industries Co., Ltd., basis weight 104 g/m²) was used.

The porous body belt which is the liquid absorbing member 105a installed in this ink jet recording apparatus was rotated 10,000 times in the direction of the arrow in Fig. 10, but during this time the porous body belt was not broken. Further, in this example, when an output image was evaluated using the porous body belt in the ink jet recording apparatus, an image with extremely excellent photographic quality was obtained. Moreover, compared to the apparatus which uses only a heater for drying the ink, the power consumption of the apparatus can be greatly reduced.

### [Example 7]

In the producing of the porous body belt of Example 6, a porous body belt was produced in the same manner as in Example 6 except for the following points. The surfaces of the end portions were bonded to each other by using the connecting material A that bonds the end portions of the first surface (front surface) of the body to be connected to each other and the welding material A that adheres the first surface of the body to be connected and the connecting material A. Further, the surfaces of the end portions were bonded to each other by using the connecting material B that bonds the end portions of the second surface (back surface) of the body to be connected to each other and the welding material B that adheres the first surface of the body to be connected and the connecting material B. As the connecting materials A and B, a biaxially oriented polypropylene film (softening point: 165°C) having a film thickness of 20 µm of Example 5 was used. In addition, as the welding materials A and B, the linear low molecular weight polyethylene (softening point: 110°C) of Example 5 was used. The average pore diameter of the first surface of the obtained porous body belt was smaller than the average pore diameter of the second surface which is the back surface of the first surface of the porous body belt. Further, in the cross section of the porous body belt in the longitudinal direction, a penetration width of the welding material A to the body to be connected was wider than a penetration width of the welding material B.

The porous body belt was used as the liquid absorbing member of the ink jet recording apparatus similar to Example 6 and the first surface of the porous body belt was installed to be in contact with the transfer body. At this time, in the connecting portion, the first surface of the porous body belt of the first image is a surface having the connecting material A, and the second surface which is the back surface of the first surface of the porous body belt is a surface having the connecting material B.

The porous body belt which is the liquid absorbing member 105a installed in this ink jet recording apparatus was rotated 10,000 times in the direction of the arrow in Fig. 10, but during this time the porous body belt was not broken. Further, in this example, when an output image was evaluated using the porous body belt in the ink jet recording apparatus, an image with extremely excellent photographic quality was obtained. Moreover, compared to the apparatus which uses only a heater for drying the ink, the power consumption of the apparatus can be greatly reduced.

This application claims the benefit of Japanese Patent Application No. 2016-107430 filed on May 30, 2016, which is hereby incorporated by reference herein in its entirety.

### [Reference Signs List]

1100 body to be connected
1200 gap between end portions of body to be connected
1300 welding material A
1400 connecting material A

## Claims

1. A porous body belt comprising:
a body to be connected that includes a porous body;
a connecting material A that bonds end portions of the body to be connected to each other; and
a welding material A that is disposed between the body to be connected and the connecting material A, penetrates at least a part of a void portion of the porous body of the body to be connected, and adheres the body to be connected and the connecting material A to each other.

2. The porous body belt according to claim 1,
wherein a softening point of the welding material A is lower than a softening point of a material constituting the porous body and a softening point of a material constituting the connecting material A.

3. The porous body belt according to claim 1 or 2,
wherein in a cross section of the porous body belt in a longitudinal direction, a penetration width of the welding material A to the body to be connected is wider than a width of the connecting material A.

4. The porous body belt according to any one of claims 1 to 3,
wherein the connecting material A includes a porous body, and
wherein the welding material A penetrates at least a part of the void portion of the porous body of the body to be connected, and at least a part of a void portion of the porous body of the connecting material A.

5. The porous body belt according to any one of claims 1 to 4,
wherein the welding material A is formed of a nonwoven fabric containing a fiber having a core-sheath structure, and
wherein a softening point of a material constituting a sheath portion contained in the fiber is lower than a softening point of a material constituting a core part.

6. The porous body belt according to any one of claims 1 to 5,
wherein the end portions of the body to be connected are further bonded to each other via the welding material A.

7. The porous body belt according to any one of claims 1 to 6, further comprising:
a connecting material B that bonds end portions of the body to be connected to each other; and
a welding material B that is disposed between the body to be connected and the connecting material B, penetrates at least a part of the void portion of the porous body of the body to be connected, and adheres the body to be connected and the connecting material B to each other,
wherein the connecting material A bonds end portions of a first surface of the body to be connected to each other,
wherein the connecting material B bonds end portions of a second surface of the body to be connected to each other,
wherein the welding material A bonds the first surface of the body to be connected and the connecting material A to each other, and
wherein the welding material B bonds the second surface of the body to be connected and the connecting material B to each other.

8. The porous body belt according to claim 6 or 7,
wherein in a cross section of the porous body belt in a longitudinal direction, a penetration width of the welding material A to the body to be connected is wider than a penetration width of the welding material B.

9. A method of producing the porous body belt according to any one of claims 1 to 8, the method comprising:
a step of disposing a welding material A and the connecting material A in this order on the body to be connected; and
a step of heating at a temperature equal to or higher than a softening point of the welding material A and at a temperature lower than a softening point of a material constituting the porous body contained in the body to be connected and a softening point of a material constituting the connecting material A.

10. An ink jet recording apparatus comprising:
an image forming unit that forms a first image including a first liquid and a coloring material on an ink receiving medium; and
a liquid absorbing member that includes a porous body which is configured to be brought into contact with the first image so as to absorb at least a portion of the first liquid from the first image,
wherein the liquid absorbing member is the porous body belt according to any one of claims 1 to 8.

11. The ink jet recording apparatus according to claim 10,
wherein an average pore diameter of a first surface of the porous body belt which is configured to be brought into contact with the first image is smaller than an average pore diameter of a second surface which is a back surface of the first surface of the porous body belt.

12. The ink jet recording apparatus according to claim 10 or 11,
wherein in a cross section of the porous body belt in a longitudinal direction, a penetration width of the welding material A to a body to be connected is wider than a penetration width of the welding material B,
wherein the first surface of the porous body belt contacting the first image is a surface having the connecting material A, and
wherein the second surface which is the back surface of the first surface of the porous body belt is a surface having the connecting material B.

13. The ink jet recording apparatus according to any one of claims 10 to 12,
wherein the ink receiving medium is a transfer body for temporarily holding the first image and a second image in which at least a portion of the first liquid is absorbed from the first image, and
wherein the ink jet recording apparatus further comprises a transfer unit that transfers the second image to a recording medium on which a final image is formed.
